# EUROPEAN PATENT APPLICATION

(11) **EP 4 474 680 A1**
(43) Date of publication of application: **11.12.2024**
(21) Application number: 23819926.9
(22) Date of filing: 09.06.2023
(51) Int. Cl.: F16H 63/18

(54) **TRANSMISSION**

(30) Priority: 09.06.2022 WO PCT/JP2022/023252
(71) Applicant: Yamaha Hatsudoki Kabushiki Kaisha, Iwata-shi, Shizuoka 438-8501 (JP)
(72) Inventor: OSAWA, Kenta, Iwata-shi, Shizuoka 438-8501 (JP); NAITO, Shinji, Iwata-shi, Shizuoka 438-8501 (JP); HOSHINA, Taiji, Iwata-shi, Shizuoka 438-8501 (JP); HIROSE, Ryotaro, Iwata-shi, Shizuoka 438-8501 (JP)
(74) Representative: Stöckeler, Ferdinand
(86) International application number: PCT/JP2023/021608
(87) International publication number: WO 2023/238946

(57) **Abstract**

A transmission (1) includes a segment (160) integrally rotating with a shift drum (130) and a segment pressing member (171) pressed onto a segment cam section (161) of the segment (160) by a segment biasing spring (172). The segment cam section is arranged so that, the maximum value of a rotational resistance force applied to the shift drum by an elastic force of the segment biasing spring in an intermediate rotation angle region (ΔθN) when shifting down from an (n+1)-th speed stage to an n-th speed stage is larger than the maximum value of the rotational resistance force applied to the shift drum by the elastic force of the segment biasing spring in the intermediate rotation angle region when shifting up from the n-th speed stage to the (n+1)-th speed stage. When shifting down from the (n+1)-th speed stage to the n-th speed stage, the rotation angle of the shift drum is temporarily maintained to fall within the intermediate rotation angle region because the shift drum receives the rotational resistance force generated by the elastic force of the segment biasing spring.

## Description

### [Technical Field]

The present teaching relates to a transmission, and particularly relates to a transmission capable of performing seamless shift up.

### [Background Art]

In a transmission having shift gears, a slider provided on a power transmission shaft (an input shaft or an output shaft) moves in the axial direction in order to shift up or down. As the slider moves in the axial direction, a dog of the slider meshes with a dog of a shift gear provided on the power transmission shaft, or meshing of a dog of the slider with a dog of a shift gear provided on the power transmission shaft is canceled.

Patent Literature 1 discloses a transmission which is capable of performing seamless shift up. When shifting up, the transmission is temporarily in a double-meshed state where dogs of two sliders simultaneously mesh with dogs of shift gears. When the transmission of Patent Literature 1 becomes the double-meshed state, a release guide surface of the dog of the slider exerts a force in the axial direction, with which the meshing of the dogs of the two sliders is canceled. With this arrangement, seamless shift up is achieved without interrupting the transmission of power.

The transmission of Patent Literature 1 includes a shift mechanism by which sliders are moved in the axial direction, and the shift mechanism includes, for each slider, a cam set, a shift arm, a shift rod, and a shift fork. One cam set includes one rocker arm and two plate cams. Each plate cam is swung by a shift actuator, such as an electric motor about an axis perpendicular to the axial direction of a power transmission shaft. As the plate cam is swung, the shift fork moves in the axial direction of the power transmission shaft, with the result that the slider connected to the shift fork moves in the axial direction of the power transmission shaft. The shift mechanism of Patent Literature 1 is arranged so that there is a difference in a stroke amount of the shift fork due to the swing of the plate cam between shift up and shift down. Due to this, when shifting down, the slider is sent to a predetermined position against a force acting in a releasing direction, which is caused by the release guide surface of the dog of the slider.

### [Citation List]

### [Patent Literatures]

[Patent Literature 1] International Publication No. 2020/250535

### [Summary]

### [Technical Problem]

The transmission of Patent Literature 1 capable of performing seamless shift up is large in size because the transmission includes, for each slider, the cam set, the shift arm, the shift rod, and the shift fork. Moreover, in the transmission of Patent Literature 1 capable of performing seamless shift up, a structure for moving the slider in the axial direction is complicated.

An object of the present teaching is to provide a transmission that is capable of performing seamless shift up and can have a simple structure for moving a slider in an axial direction while suppressing an increase in the size.

### [Solution to Problem]

A transmission of an embodiment of the present teaching is arranged as described below.

The transmission includes: shift gears which are provided on an input shaft and an output shaft to be each rotatable relative to the input shaft or the output shaft and immovable in an axial direction of the input shaft and the output shaft; sliders which are provided on the input shaft and the output shaft, each of which is integrally rotatable with the input shaft or the output shaft and is movable in the axial direction, each of which includes a dog capable of meshing with a dog of a shift gear neighboring the each slider in the axial direction among the shift gears, and which are driven in the axial direction to change a speed stage; and shift members which are integrally movable with the respective sliders in the axial direction. The transmission is arranged so that, when shifting up from an n-th speed stage (n is a natural number of one or more) to an (n+1)-th speed stage, the transmission is temporarily in a double-meshed state where an n-th gear and an (n+1)-th gear among the shift gears simultaneously mesh with an n-th speed stage slider and an (n+1)-th speed stage slider among the sliders by the dogs, and when the transmission is in the double-meshed state, a force of canceling meshing by the dogs is generated in the n-th speed stage slider.

The transmission further includes: one shift drum which has guide grooves in which parts of the shift members are located, respectively, and is arranged to move the shift members in the axial direction by rotating about a drum rotational central axis that is in parallel to the axial direction, when shifting down from the (n+1)-th speed stage to the n-th speed stage, the shift drum rotating in a first direction from a first rotation angle to a second rotation angle, and when shifting up from the n-th speed stage to the (n+1)-th speed stage, the shift drum rotating in a second direction opposite to the first direction, from the second rotation angle to the first rotation angle; at least one segment which rotates integrally with the shift drum and includes a segment cam section; at least one segment pressing member which is provided to make contact with the segment cam section of the at least one segment; at least one segment biasing spring which is provided to press the at least one segment pressing member onto the segment cam section toward the drum rotational central axis; and a shift actuator which is configured to rotate the shift drum.

A rotation angle of the shift drum at a time point at which meshing between the (n+1)-th gear and the (n+1)-th speed stage slider by the dogs is canceled, when shifting down from the (n+1)-th speed stage to the n-th speed stage, is defined as a third rotation angle. A rotation angle of the shift drum at a time point at which the n-th speed stage slider starts to move in the axial direction after the shift drum rotates to the third rotation angle, when shifting down from the (n+1)-th speed stage to the n-th speed stage, is defined as a fourth rotation angle. A rotation angle region of the shift drum from the third rotation angle to the fourth rotation angle is defined as an intermediate rotation angle region.

The segment cam section of the at least one segment is arranged to differentiate a change in distance from the drum rotational central axis to a part of the segment cam section, which is in contact with the at least one segment pressing member, between shifting down from the (n+1)-th speed stage to the n-th speed stage and shifting up from the n-th speed stage to the (n+1)-th speed stage, so that the maximum value of a rotational resistance force applied to the shift drum due to application of a rotational resistance force to the at least one segment by an elastic force of the at least one segment biasing spring in the intermediate rotation angle region in shift down from the (n+1)-th speed stage to the n-th speed stage is larger than the maximum value of the rotational resistance force applied to the shift drum due to the application of the rotational resistance force to the at least one segment by the elastic force of the at least one segment biasing spring in the intermediate rotation angle region in shift up from the n-th speed stage to the (n+1)-th speed stage.

The transmission is arranged so that, when shifting down from the (n+1)-th speed stage to the n-th speed stage, the rotation angle of the shift drum is temporarily maintained to fall within the intermediate rotation angle region, because a rotational resistance force larger than the maximum value of the rotational resistance force applied to the shift drum due to the elastic force of the at least one segment biasing spring in the intermediate rotation angle region in shift up from the n-th speed stage to the (n+1)-th speed stage is applied to the shift drum due to the elastic force of the at least one segment biasing spring in the intermediate rotation angle region in shift down from the (n+1)-th speed stage to the n-th speed stage.

With this arrangement, when shifting up from the n-th speed stage to the (n+1)-th speed stage, the transmission is temporarily in the double-meshed state where the two sliders simultaneously meshed with the two shift gears. The transmission is arranged so that, when the transmission become in the double-meshed state, a force of canceling meshing of the dog of the n-th speed stage slider among the two sliders is generated. Seamless shift up is therefore achieved without interrupting the transmission of power. In such a transmission arranged to allow seamless shift up, it may be necessary to differentiate the moving distance in the axial direction of the slider between the shift up and the shift down. Furthermore, the structure for canceling the double-meshed state when shifting up from the n-th speed stage to the (n+1)-th speed stage may obstruct the movement of the n-th speed stage slider when shifting down from the (n+1)-th speed stage to the n-th speed stage. On this account, the shift mechanism of Patent Literature 1 is arranged so that, when shifting down from the (n+1)-th speed stage to the n-th speed stage, the n-th speed stage slider is forcibly moved to a position where meshing with the n-th gear by dogs is possible, by a cam structure of a plate cam. On the other hand, as a structure for moving plural sliders in the axial direction, the transmission of the present teaching includes: shift members which are integrally movable with the respective sliders in the axial direction; a shift drum which is arranged to move the shift members in the axial direction by rotating; at least one segment which rotates integrally with the shift drum; at least one segment pressing member which is provided to make contact with the segment cam section of the at least one segment; at least one segment biasing spring which is provided to press the at least one segment pressing member onto the segment cam section; and a shift actuator which is configured to rotate the shift drum. The segment cam section is arranged to differentiate a change in distance from the drum rotational central axis to a part of the segment cam section, which is in contact with the at least one segment pressing member, between shifting down from the (n+1)-th speed stage to the n-th speed stage and shifting up from the n-th speed stage to the (n+1)-th speed stage, so that the maximum value of a rotational resistance force applied to the shift drum due to application of an elastic force of the at least one segment biasing spring in the intermediate rotation angle region in shift down from the (n+1)-th speed stage to the n-th speed stage is larger than the maximum value of the rotational resistance force applied to the shift drum due to the application of the elastic force of the at least one segment biasing spring in the intermediate rotation angle region in shift up from the n-th speed stage to the (n+1)-th speed stage. The intermediate rotation angle region is a rotation angle region between the third rotation angle and the fourth rotation angle. The third rotation angle is a rotation angle of the shift drum at a time point at which meshing between the (n+1)-th gear and the (n+1)-th speed stage slider by the dogs is canceled, when shifting down from the (n+1)-th speed stage to the n-th speed stage. The fourth rotation angle is a rotation angle of the shift drum at a time point at which the n-th speed stage slider starts to move in the axial direction after the shift drum rotates to the third rotation angle, when shifting down from the (n+1)-th speed stage to the n-th speed stage. When shifting down from the (n+1)-th speed stage to the n-th speed stage, in the intermediate rotation angle region, the shift drum receives a rotational resistance force due to the elastic force of the at least one segment biasing spring, so that the rotation angle of the shift drum is temporarily maintained to fall within the intermediate rotation angle region. On this account, control of changing the relative rotation speed between the n-th gear and the n-th speed stage slider can be performed while the rotation angle of the shift drum is temporarily maintained in the intermediate rotation angle region. For example, control of changing the relative rotational directions of the n-th gear and the n-th speed stage slider can be performed. When shifting down from the (n+1)-th speed stage to the n-th speed stage, as such control is performed while the rotation angle of the shift drum is temporarily maintained in the intermediate rotation angle region, the structure for canceling the double-meshed state is less likely to influence on the movement of the n-th speed stage slider in the axial direction. On this account, it is unnecessary to employ the structure of forcibly moving the n-th speed stage slider recited in Patent Literature 1, as a structure for moving the n-th speed stage slider to a position where meshing with the n-th gear by dogs is possible, when shifting down from the (n+1)-th speed stage to the n-th speed stage. It is therefore possible to simplify the structure for moving the slider in the axial direction in the transmission which performs seamless shift up.

In addition to the above, the shift drum has the guide grooves in which parts of the shift members moving in the axial direction integrally with the sliders are located, respectively, and moves the shift members in the axial direction by rotating. In other words, the transmission has one shift drum for plural sliders in order to move the sliders in the axial direction. Furthermore, the shift drum rotates about an axis that is in parallel to the axial direction of the input shaft and the output shaft. On the other hand, the transmission of Patent Literature 1 includes a cam set for each slider. Furthermore, a plate cam included in the cam set swings about an axis perpendicular to the axial direction of the input shaft and the output shaft. It is therefore possible to suppress the transmission from being upsized as compared to the transmission of Patent Literature 1.

For the reasons above, the transmission of the present teaching is capable of performing seamless shift up, is suppressed in size, and has a simple structure for moving the slider in the axial direction.

A transmission of an embodiment of the present teaching may be arranged as described below.

The segment cam section of the at least one segment is arranged so that, when shifting up from the n-th speed stage to the (n+1)-th speed stage, the shift drum continuously rotates without maintaining the rotation angle of the shift drum to fall within the intermediate rotation angle region.

This arrangement makes it possible to perform swift shift up from the n-th speed stage to the (n+1)-th speed stage.

A transmission of an embodiment of the present teaching may be arranged as described below.

The transmission further includes a slider pressing member which is provided on the input shaft or the output shaft to make contact with the n-th speed stage slider.

The slider pressing member includes a slider biasing spring which is configured to apply an elastic force to the n-th speed stage slider in a radial direction away from the input shaft or the output shaft. The n-th speed stage slider includes a slider cam surface which makes contact with the slider pressing member when the speed stage is the n-th speed stage and is arranged to convert an elastic force exerted in the radial direction by the slider biasing spring of the slider pressing member into a force acting in the axial direction.

Among the shift members, a part of an n-th speed stage shift member moving in the axial direction integrally with the n-th speed stage slider is located in an n-th speed stage guide groove among the guide grooves.

The n-th speed stage guide groove has a groove width that allows the part of the n-th speed stage shift member to move in the n-th speed stage guide groove in the axial direction when shifting down from the (n+1)-th speed stage to the n-th speed stage.

The transmission is arranged so that, when shifting down from the (n+1)-th speed stage to the n-th speed stage, the n-th speed stage slider moves in the axial direction due to contact between the n-th speed stage shift member and the n-th speed stage guide groove and then the n-th speed stage slider moves in the axial direction because the slider cam surface of the n-th speed stage slider receives an elastic force of the slider biasing spring.

According to this arrangement, the transmission is arranged so that, when shifting down from the (n+1)-th speed stage to the n-th speed stage, the n-th speed stage slider moving in the axial direction due to contact between the n-th speed stage shift member and the n-th speed stage guide groove and then the n-th speed stage slider moving in the axial direction as the slider cam surface of the n-th speed stage slider receives an elastic force of the slider biasing spring. As described above, when shifting down from the (n+1)-th speed stage to the n-th speed stage, the control of changing the relative rotation speed between the n-th gear and the n-th speed stage slider is performed while the rotation angle of the shift drum is temporarily maintained in the intermediate rotation angle region. On this account, the structure for canceling the double-meshed state is less likely to influence on the movement of the n-th speed stage slider in the axial direction. On this account, it is possible to further reliably move the n-th speed stage slider in the axial direction by a force of moving the n-th speed stage slider in the axial direction, which is generated as the slider cam surface receives the elastic force of the slider biasing spring. In addition to the above, the slider pressing member including the slider biasing spring is provided on the input shaft or the output shaft. On this account, the slider pressing member that is part of the structure for moving the n-th speed stage slider in the axial direction can be provided while suppressing the transmission from being upsized.

A transmission of an embodiment of the present teaching may be arranged as described below.

The transmission further includes a slider pressing member which is provided on the input shaft or the output shaft to make contact with the n-th speed stage slider.

The slider pressing member includes a slider biasing spring which is configured to apply an elastic force to the n-th speed stage slider in a radial direction away from the input shaft or the output shaft.

The n-th speed stage slider has a checking groove in which the slider pressing member is fitted when the speed stage is not the n-th speed stage.

The checking groove is arranged so that, when shifting down from the (n+1)-th speed stage to the n-th speed stage, a resistance is applied by the elastic force of the slider biasing spring to movement in the axial direction of the n-th speed stage slider that is in a state in which the slider pressing member is fitted in the checking groove.

The transmission is arranged so that, when shifting down from the (n+1)-th speed stage to the n-th speed stage, a resistance is applied to a rotation in the first direction of the shift drum by the elastic force of the slider biasing spring in the intermediate rotation angle region or in a rotation angle region immediately after the intermediate rotation angle region.

According to this arrangement, the checking groove of the n-th speed stage slider is formed to allow the slider pressing member to be fitted therein. On this account, when shifting down from the (n+1)-th speed stage to the n-th speed stage, the elastic force of the slider biasing spring of the slider pressing member applies a resistance to the movement in the axial direction of the n-th speed stage slider in the state in which the slider pressing member is fitted in the checking groove. On this account, when shifting down from the (n+1)-th speed stage to the n-th speed stage, the elastic force of the slider biasing spring is able to impart a resistance to the rotation of the shift drum in the intermediate rotation angle region or in a rotation angle region immediately after the intermediate rotation angle region. When the elastic force of the slider biasing spring imparts a resistance to the rotation of the shift drum in the intermediate rotation angle region or in a rotation angle region immediately after the intermediate rotation angle region in shift down from the (n+1)-th speed stage to the n-th speed stage, it is possible to temporarily maintain the rotation angle of the shift drum to fall within the intermediate rotation angle region by utilizing the elastic force of the slider biasing spring in addition to the at least one segment biasing spring. It is therefore possible to further reliably maintain the rotation angle of the shift drum in the intermediate rotation angle region, as compared to a case where the elastic force of the slider biasing spring is not utilized for imparting a resistance to the rotation of the shift drum. Furthermore, when a resistance is applied to the rotation of the shift drum by an elastic force of the slider biasing spring in the intermediate rotation angle region or a rotation angle region immediately after the intermediate rotation angle region in shift down from the (n+1)-th speed stage to the n-th speed stage, the rotation angle region in which a resistance is applied to the rotation of the shift drum is arranged to be wide. Consequently, it becomes easy to perform the control of changing the relative rotation speed between the n-th gear and the n-th speed stage slider, which starts in the intermediate rotation angle region.

A transmission of an embodiment of the present teaching may be arranged as described below.

The transmission further includes a shift power transmission unit which is configured to transmit power from the shift actuator to the shift drum.

The shift power transmission unit is structured to have a backlash.

If the shift power transmission unit is structured not to have a backlash or to hardly have a backlash, the shift drum can be temporarily maintained in the intermediate rotation angle region under the control of the shift actuator, even though the transmission does not include a segment. In such a case, however, the shift actuator needs to be highly accurate. When, for example, the shift actuator is an electric motor, the angle of the rotational shaft of the electric motor needs to be highly accurate. Because the transmission has the shift drum and the segment and the shift power transmission unit configured to transmit power from the shift actuator to the shift drum is structured to have a backlash, it is possible to lower the accuracy required for the shift actuator.

A transmission of an embodiment of the present teaching may be arranged as described below. The shift power transmission unit includes: contact portions which are formed in the shift drum or a member integrally rotating with the shift drum and are aligned in the circumferential direction; and a shift drum feeding member which is driven by the shift actuator to be swung and rotates the shift drum by making contact with any of the contact portions.

A transmission of an embodiment of the present teaching may be arranged as described below.

The at least one segment is one segment.

The at least one segment biasing spring is one segment biasing spring.

The segment cam section includes: an n-th speed stage recess which makes contact with the segment pressing member when the speed stage is the n-th speed stage; an (n+1)-th speed stage recess which makes contact with the segment pressing member when the speed stage is the (n+1)-th speed stage; and an intermediate maintaining portion provided between the n-th speed stage recess and the (n+1)-th speed stage recess.

The intermediate maintaining portion is arranged to differentiate a change in distance from the drum rotational central axis to a part of the intermediate maintaining portion, which is in contact with the segment pressing member, between shifting down and shifting up, so that the maximum value of the rotational resistance force applied to the shift drum due to application of the rotational resistance force to the segment by the elastic force of the segment biasing spring in the intermediate rotation angle region in shift down from the (n+1)-th speed stage to the n-th speed stage is larger than the maximum value of the rotational resistance force applied to the shift drum due to the application of the rotational resistance force to the segment by the elastic force of the segment biasing spring in the intermediate rotation angle region in shift up from the n-th speed stage to the (n+1)-th speed stage.

The transmission is arranged so that, when shifting down from the (n+1)-th speed stage to the n-th speed stage, the rotation angle of the shift drum is temporarily maintained to fall within the intermediate rotation angle region while the segment pressing member is in contact with the intermediate maintaining portion, because a rotational resistance force larger than the maximum value of the rotational resistance force applied to the shift drum due to the elastic force of the segment biasing spring in the intermediate rotation angle region in shift up from the n-th speed stage to the (n+1)-th speed stage is applied to the shift drum due to the elastic force of the segment biasing spring in the intermediate rotation angle region in shift down from the (n+1)-th speed stage to the n-th speed stage.

According to this arrangement, the transmission has one segment for one shift drum. For this reason, the transmission can be downsized and the mechanism for moving the sliders in the axial direction can be simplified, as compared to a case where plural segments are provided for one shift drum.

In the present teaching and the embodiments, an axial direction is a direction in parallel to the rotational central axis of each of an input shaft and an output shaft.

In the present teaching and the embodiments, each of the sliders may have a gear. When each of the sliders has a gear, at least one of the sliders may have two gears aligned in an axial direction. In the present teaching and the embodiments, a slider may not include a gear as in the slider of Patent Literature 1. In the present teaching and the embodiments, sliders may slide on the outer circumferential surface of an input shaft or an output shaft.

In the present teaching and the embodiments, a shift member includes at least a shift fork connected to a slider. In the present teaching and the embodiments, the shift member may be a shift fork. In this case, part of the shift fork is located in a guide groove of a shift drum. In the present teaching and the embodiments, the shift member may include the shift fork and at least one member different from the shift fork. In this case, part of the member different from the shift fork is located in a guide groove of a shift drum. For example, the shift member may be constituted by a shift fork, a shift rod fixed to the shift fork, and a shift arm fixed to the shift rod. The shift fork, the shift rod, and the shift arm integrally move in an axial direction.

In the present teaching and the embodiments, one shift drum configured to rotate to move shift members in an axial direction does not indicate one shift drum configured to rotate to simultaneously move shift members in an axial direction. This expression merely indicates that each of the shift members is moved in the axial direction by the rotation of the shift drum.

In the present teaching and the embodiments, the number of segments may be one or plural. In the present teaching and the embodiments, the number of segment pressing members may be one or plural. The number of segment pressing members may be identical with, larger than, or smaller than the number of segments. In the present teaching and the embodiments, the number of segment biasing springs may be one or plural. The number of segment biasing springs may be identical with or larger than the number of segment pressing members. When the number of segments is plural, a segment pressing member and a segment biasing spring may be provided for each segment. When a transmission has one segment, the transmission may have one segment pressing member and one segment biasing spring.

In the present teaching and the embodiments, when the number of segments is plural, an expression "at least one segment has a segment cam section" does not indicate that each of segments has a segment cam section, and indicates that segments have one segment cam section. The segment cam section may be constituted by plural parts that are physically separated from one another. The segment cam section may be, for example, formed at an outer circumferential edge of at least one segment.

In the present teaching and the embodiments, in an intermediate rotation angle region in shift down from an (n+1)-th speed stage to an n-th speed stage, a rotational resistance force applied to a shift drum due to application of a rotational resistance force to at least one segment by an elastic force of at least one segment biasing spring is not limited to a case where the number of the at least one segment biasing spring is plural and all of the segment biasing springs apply a rotational resistance to the shift drum in the intermediate rotation angle region in shift down from the (n+1)-th speed stage to the n-th speed stage. When the number of at least one segment biasing spring is plural, in an intermediate rotation angle region in shift down from an (n+1)-th speed stage to an n-th speed stage, the number of segment biasing springs actually applying a rotational resistance to the shift drum may be one or plural. For example, when the number of the at least one segment biasing spring is two and the two segment biasing springs simultaneously apply a rotational resistance to the shift drum, a rotational resistance force applied to the shift drum by elastic forces of the two segment biasing springs indicates the total rotational resistance force simultaneously applied to the shift drum by each of the elastic forces of the two segment biasing springs. In an intermediate rotation angle region in shift down from an (n+1)-th speed stage to an n-th speed stage, at least one segment biasing spring that actually applies a rotational resistance to the shift drum may be identical with or different from at least one segment biasing spring that actually applies a rotational resistance to the shift drum in an intermediate rotation angle region in shift up from an n-th speed stage to an (n+1)-th speed stage.

In the present teaching and the embodiments, a change in distance from a drum rotational central axis to a part of the segment cam section, which is in contact with at least one segment pressing member, is different between shift up from an (n+1)-th speed stage to an n-th speed stage and shift down from the n-th speed stage to the (n+1)-th speed stage. When the number of at least one segment pressing member is plural, the expression indicates that, in regard to at least one of segments, a change in distance from a drum rotational central axis to a part of the segment cam section, which is in contact with the segment pressing member, is different between shift down from an (n+1)-th speed stage to an n-th speed stage and shift up from the n-th speed stage to the (n+1)-th speed stage. At a time point during shift down from an (n+1)-th speed stage to an n-th speed stage, one segment pressing member may be in contact with a segment cam section at plural points or lines, when viewed in the direction of a drum rotational central axis. When the number of at least one segment pressing member is one and the above-described contact state is established, an expression "a change in distance from a drum rotational central axis to a part of the segment cam section, which is in contact with one segment pressing member, is different between shift down from an (n+1)-th speed stage to an n-th speed stage and shift up from the n-th speed stage to the (n+1)-th speed stage" indicates that, in regard to any parts of the segment cam section in contact with one segment pressing member, a change in distance from a drum rotational central axis to a part of the segment cam section, which is in contact with one segment pressing member, is different between shift down from an (n+1)-th speed stage to an n-th speed stage and shift up from the n-th speed stage to the (n+1)-th speed stage.

In the present teaching and the embodiments, an n-th speed stage slider is a slider used for an n-th speed stage, but may not be exclusively used for the n-th speed stage. The n-th speed stage slider may be used for the n-th speed stage and a speed stage that is different from the n-th speed stage by two or more stages. This applies to an n-th speed stage shift member that moves in the axial direction integrally with the n-th speed stage slider and an n-th speed stage guide groove in which part of the n-th speed stage shift member is located.

In the present teaching and the embodiments, a first rotation angle and a second rotation angle are rotation angles relative to a reference position of the shift drum. The reference position may be the position of the shift drum when, for example, the transmission is in a neutral state. In the present teaching and the embodiments, when shifting down from an (n+1)-th speed stage to an n-th speed stage, the rotation angle (third rotation angle) of the shift drum at a time point at which meshing between an (n+1)-th gear and an (n+1)-th speed stage slider by dogs is canceled may be the rotation angle of the shift drum before the movement of the (n+1)-th speed stage slider in the axial direction is completed in shift down.

In the present teaching and the embodiments, an expression "the rotation angle of a shift drum is temporarily maintained in an intermediate rotation angle region" indicates that the rotation of the shift drum is stopped or substantially stopped in a state in which the rotation angle of the shift drum falls within the intermediate rotation angle region. The state in which the rotation of the shift drum is substantially stopped encompasses, for example, a state in which the shift drum vibrates once or plural times in a first direction and a second direction or a state in which the shift drum slowly rotates in the first direction. In the present teaching and the embodiments, the minimum rotation speed of the shift drum in the intermediate rotation angle region when shifting down may be smaller than either of the minimum rotation speed of the shift drum in a rotation angle region from a first rotation angle to the intermediate rotation angle region when shifting down and the minimum rotation speed of the shift drum in a rotation angle region from the intermediate rotation angle region to a second rotation angle when shifting down. An average rotation speed of the shift drum in the intermediate rotation angle region when shifting down may be smaller than either of an average rotation speed of the shift drum in a rotation angle region from a first rotation angle to the intermediate rotation angle region when shifting down and an average rotation speed of the shift drum in a rotation angle region from the intermediate rotation angle region to a second rotation angle when shifting down.

In the present teaching and the embodiments, a shift actuator configured to rotate a shift drum may be, for example, an electric motor, a hydraulic or pneumatic actuator, or an electromagnetic solenoid. The shift actuator may not generate a rotational force. In the present teaching and the embodiments, the shift actuator is provided to rotationally drive a shift drum directly or indirectly by a shift actuator. A case where the shift drum is rotationally driven directly by the shift actuator is a case where the shift actuator generates a rotational force and the rotational central axis of the shift actuator coincides with a drum rotational central axis. In the present teaching and the embodiments, the shift actuator rotates the shift drum at least start of shift up and at least start of shift down. In the present teaching and the embodiments, when shifting down from an (n+1)-th speed stage to an n-th speed stage, the shift actuator rotates the shift drum that is in a state in which the rotation angle of the shift drum is maintained in the intermediate rotation angle region.

In the present teaching and the embodiments, the transmission may include a shift power transmission unit which is configured to transmit power from the shift actuator to the shift drum and has a backlash. The shift power transmission unit is configured not to stop the rotation of the shift drum or not to immediately stop the rotation of the shift drum even if the shift actuator is stopped, depending on the rotation angle of the shift drum. When the shift actuator generates a rotational force, the shift power transmission unit may be provided to cause the rotational central axis of the shift actuator to coincide with a drum rotational central axis. In this case, the shift power transmission unit may have, for example, a spline structure with a backlash. The shift power transmission unit may include: contact portions which are formed in the shift drum or a member integrally rotating with the shift drum and are aligned in the circumferential direction; and a shift drum feeding member which is driven by the shift actuator to be swung and rotates the shift drum by making contact with any of the contact portions. The member integrally rotating with the shift drum may be a segment or a member different from a segment. In the present teaching and the embodiments, the expression "the shift power transmission unit has a structure with a backlash" encompasses a case where there is a backlash between the shift power transmission unit and part of the shift actuator, a case where there is a backlash between the shift power transmission unit and part of the shift drum, and a case where there is a backlash between components of the shift power transmission unit.

In the present teaching and the embodiments, the transmission is a multistage transmission. In the present teaching and the embodiments, the transmission is a non-synchronous transmission. In the present teaching and the embodiments, the transmission is a constant-mesh transmission. In the present teaching and the embodiments, the transmission may be an AMT (Automated Manual installation) or an MT (Manual Transmission). The AMT is also known as a semi-automatic transmission.

In the present teaching and the embodiments, the transmission is mounted on a vehicle, for example. The vehicle on which the transmission is mounted may be a straddled vehicle or an automobile. The straddled vehicle includes a motorcycle, a motor tricycle, a four-wheeled buggy (ATV: All Terrain Vehicle), a snowmobile, and a personal watercraft, for example. The motorcycle includes a scooter, an engine-equipped bicycle, a moped, etc. In the present teaching and the embodiments, for example, the transmission may be mounted on an apparatus such as an agricultural machine, which is not a vehicle. In the present teaching and the embodiments, a driving source configured to generate power transmitted to the input shaft of the transmission may be an engine, an electric motor, or both of the engine and the electric motor. In the present teaching, the input shaft may be connected to the driving source through a clutch. In the present teaching, the output shaft is connected to a driving target (e.g., a wheel).

In the present teaching and the embodiments, an apparatus on which the transmission is mounted includes a driving source and a controller, in addition to the transmission. The apparatus on which the transmission is mounted may include a clutch. The clutch is provided between the transmission and the driving source. The controller is configured to control the driving source and the transmission. When a clutch is provided, the controller controls the clutch, too. The controller may switch the clutch from a connection state to a cut-off state when shift down from an (n+1)-th speed stage to an n-th speed stage starts. The controller may perform below-described relative rotation control in the intermediate rotation angle region. The relative rotation control is control to increase the rotation speed of the input shaft by controlling at least the driving source. To be more specific, for example, the controller may switch the clutch from the cut-off state to a semi-connection state after slightly increasing the rotation speed of the driving source. As the rotation speed of the input shaft is increased, the relative rotation speed between an n-th gear and an n-th speed stage slider is changed. In the relative rotation control, the controller may change a relative rotational direction between the n-th gear and the n-th speed stage slider.

In the present teaching and the embodiments, at least one of plural options encompasses all conceivable combinations of the options. At least one of plural options may be one of the options, some of the options, or all of the options. For example, at least one of A, B, or C indicates only A, only B, only C, A and B, A and C, B and C, or A, B, and C.

In the present teaching and the embodiments, A and/or B means A and B, or A or B.

In the claims, when the number of a constituent feature is not clearly specified and the constituent feature is expressed in a singular form in English, the number of the constituent feature may be more than one in the present teaching. In the present teaching, the number of the constituent features may be only one.

In the present teaching and the embodiments, terms "including", "comprising", "having", and derivatives thereof are used to encompass not only listed items and equivalents thereof but also additional items. In the present teaching and the embodiments, the terms "mounted", "connected", "coupled", and "supported" are used in broad sense. Specifically, not only direct attachment, connection, coupling, and support but also indirect attachment, connection, coupling, and support are included. Further, connected and coupled are not limited to physical or mechanical connections and couplings. They also include direct or indirect electrical connections and couplings.

Unless otherwise defined, all terms (technical and scientific terms) used in this specification and claims indicate meanings typically understood by a person with ordinary skill in the art in the technical field to which the present teaching belongs. Terms such as those defined in commonly used dictionaries are to be interpreted as having meaning that is consistent with their meaning in the context of the relevant art and the present disclosure, and are not to be interpreted in an idealized or excessively formal sense.

In this specification, the term "may" is non-exclusive. The term "may" indicates "may but not must". In the present specification, "may" implicitly encompasses "do not". In this specification, an arrangement which is explained by using the term "may" exerts at least the above-described effects of the arrangement of claim 1.

Before the embodiments of the present teaching are detailed, it is informed that the present teaching is not limited to the configurations and layout of elements described below and/or shown in drawings. The present teaching is also applicable to embodiments other than the embodiments described later. The present teaching may be implemented as various modifications of the below-described embodiment.

### [Advantageous Effects]

An object of the present teaching is to provide a transmission that is capable of performing seamless shift up and can have a simple structure for moving a slider in an axial direction while suppressing an increase in the size.

### [Brief Description of Drawings]

FIG. 1 illustrates a transmission of a First Embodiment of the present teaching.
FIG. 2 is a schematic diagram showing a part of an example of a transmission of a Second Embodiment of the present teaching.
FIG. 3(a) is a schematic diagram showing a part of an example of a transmission of a Third Embodiment of the present teaching. FIG. 3(b) is a schematic diagram showing a part of an example of a transmission of a Fourth Embodiment of the present teaching.
FIG. 4 illustrates a transmission of a Fifth Embodiment of the present teaching.
FIG. 5 is a cross section of a part of a transmission of each of a Sixth Embodiment and a Seventh Embodiment of the present teaching.
FIG. 6 includes developed sectional views of a shift gear and a slide gear of the transmission of each of the Sixth Embodiment and the Seventh Embodiment.
FIG. 7 is a schematic diagram of a shift mechanism of the transmission of each of the Sixth Embodiment and the Seventh Embodiment.
FIG. 8 is a developed view of an outer circumferential portion of a shift drum of each of the Sixth Embodiment and the Seventh Embodiment.
FIG. 9 outlines movement of a shift member of each of the Sixth Embodiment and the Seventh Embodiment, when drive shift up is performed.
FIG. 10 outlines movement of the shift member of the Sixth Embodiment, when a coast shift down is performed.
FIG. 11 outlines movement of the shift member of the Seventh Embodiment, when a coast shift down is performed.
FIG. 12 shows a segment, a segment pressing member, a segment biasing spring, and a shift drum feeding member of each of the Sixth Embodiment and the Seventh Embodiment, which are viewed in the axial direction.
FIG. 13(a) is a graph showing a torque generated in the shift drum by an elastic force of the segment biasing spring when shifting down in the transmission of each of the Sixth Embodiment and the Seventh Embodiment, whereas FIG. 13(b) is a graph showing a torque generated in the shift drum by an elastic force of the segment biasing spring when shifting up.
FIG. 14 is a graph showing a torque generated in the shift drum by elastic forces of the segment biasing spring and a slide gear biasing spring of each of the Sixth Embodiment and the Seventh Embodiment.

### [Description of the Embodiments]

### <First Embodiment>

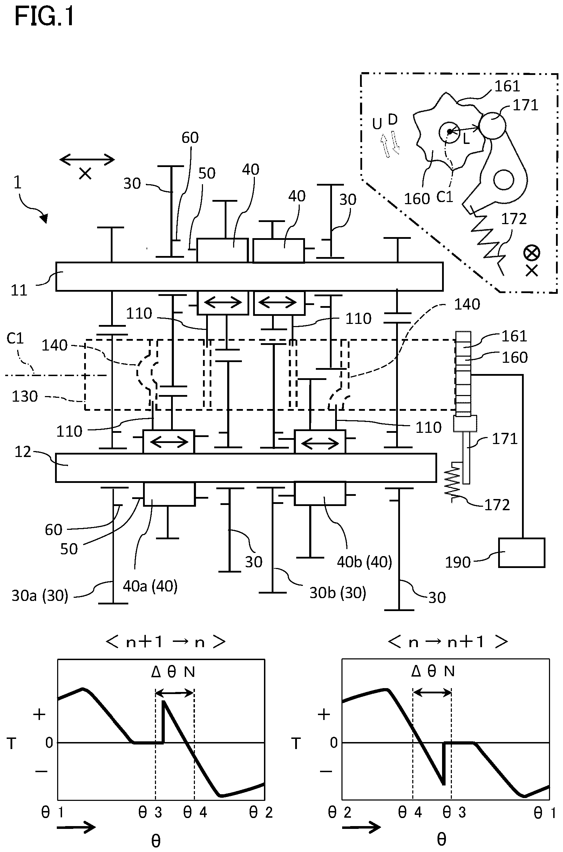

Hereinafter, the First Embodiment of the present teaching will be described with reference to FIG. 1. FIG. 1 shows an example of the transmission 1 of the First Embodiment. The transmission 1 of the First Embodiment includes an input shaft 11, an output shaft 12, shift gears 30, sliders 40, shift members 110, one shift drum 130, at least one segment 160, at least one segment pressing member 171, at least one segment biasing spring 172, and a shift actuator 190. The shift gears 30 are provided on the input shaft 11 and the output shaft 12. Each of the shift gears 30 is provided to be rotatable relative to the input shaft 11 or the output shaft 12 and immovable in the axial direction of the input shaft 11 or the output shaft 12. In FIG. 1, an arrow X indicates the axial direction of each of the input shaft 11 and the output shaft 12. In the descriptions below, an axial direction indicates the axial direction of each of the input shaft 11 and the output shaft 12. The sliders 40 are provided on the input shaft 11 and the output shaft 12. Each of the sliders 40 is provided to be rotatable together with the input shaft 11 or the output shaft 12 and movable in the axial direction. Each of the sliders 40 includes a dog 50 which is able to mesh with a dog 60 of a shift gear 30 that neighbors the slider 40 in the axial direction. Each of the sliders 40 is connectable to at least one of the shift gears 30 by the dog 50. The transmission 1 is arranged so that a torque is transmitted between the input shaft 11 and the output shaft 12 through a slider 40 and a shift gear 30 that mesh with each other by the dogs 50 and 60. Each slider 40 is driven in the axial direction in order to change the speed stage. The shift members 110 are arranged to move together with the respective sliders 40 in the axial direction. The transmission 1 is arranged so that, when shifting up from an n-th speed stage (n is a natural number of one or more) to an (n+1)-th speed stage, the transmission 1 is temporarily in a double-meshed state where an n-th gear 30a and an (n+1)-th gear 30b among the shift gears 30 simultaneously mesh with an n-th speed stage slider 40a and an (n+1)-th speed stage slider 40b by the dogs 50 and 60. The transmission 1 is arranged so that a force of canceling the meshing by the dogs 50 and 60 is generated in the n-th speed stage slider 40a, when the transmission 1 is in the double-meshed state. While in FIG. 1 the n-th speed stage slider 40a and the (n+1)-th speed stage slider 40b are both provided on the output shaft 12, these sliders may be provided on the input shaft 11, or may be provided on different shafts.

The shift drum 130 has guide grooves 140 in which parts of the shift members 110 are located, respectively. The shift drum 130 moves the shift members 110 in the axial direction by rotating about a drum rotational central axis C1 that is in parallel to the axial direction. When shifting down from an (n+1)-th speed stage to an n-th speed stage, the shift drum 130 rotates in a direction D (first direction) from a first rotation angle θ1 to a second rotation angle θ2. When shifting up from the n-th speed stage to the (n+1)-th speed stage, the shift drum 130 rotates in a direction U (second direction) opposite to the direction D, from the second rotation angle θ2 to the first rotation angle θ1. The at least one segment 160 is arranged to rotate integrally with the shift drum 130. The at least one segment 160 includes a segment cam section 161. The at least one segment pressing member 171 is provided to make contact with the segment cam section 161 of the at least one segment 160. The at least one segment biasing spring 172 is provided to press the at least one segment pressing member 171 onto the segment cam section 161 toward the drum rotational central axis C1. The shift actuator 190 is configured to rotate the shift drum 130. While in FIG. 1 the segment cam section 161 is formed at an outer circumferential edge of the segment 160, the disclosure is not limited to this arrangement.

A rotation angle θ of the shift drum at a time point at which meshing between the (n+1)-th gear 30b and the (n+1)-th speed stage slider 40b by the dogs 50 and 60 is canceled, when shifting down from the (n+1)-th speed stage to the n-th speed stage, is defined as a third rotation angle θ3. A rotation angle θ of the shift drum 130 at a time point at which the n-th speed stage slider 40a starts to move in the axial direction after the shift drum 130 rotates to the third rotation angle θ3, when shifting down from the (n+1)-th speed stage to the n-th speed stage, is defined as a fourth rotation angle θ4. A rotation angle region of the shift drum 130 from the third rotation angle θ3 to the fourth rotation angle θ4 is defined as an intermediate rotation angle region ΔθN. FIG. 1 includes a graph showing changes of a torque T which is generated in the shift drum 130 by an elastic force of the at least one segment biasing spring 172 when shifting down from the (n+1)-th speed stage to the n-th speed stage. FIG. 1 includes another graph showing changes of a torque T which is generated in the shift drum 130 by an elastic force of the at least one segment biasing spring 172 when shifting up from the n-th speed stage to the (n+1)-th speed stage. In these two graphs, the vertical axis indicates the torque T whereas the horizontal axis indicates the rotation angle θ of the shift drum 130. In the graph indicating the case of shifting down, a torque T corresponding to a positive value on the vertical axis indicates a rotation resistance torque applying a resistance to the rotation of the shift drum 130 in the direction D, whereas a torque T corresponding to a negative value on the vertical axis indicates a rotation driving torque rotating the shift drum 130 in the direction D. In the graph indicating the case of shifting up, a torque T corresponding to a positive value on the vertical axis indicates a rotation resistance torque applying a resistance to the rotation of the shift drum 130 in the direction U, whereas a torque T corresponding to a negative value on the vertical axis indicates a rotation driving torque rotating the shift drum 130 in the direction U.

The segment cam section 161 of the at least one segment 160 is arranged so that the maximum value of the rotational resistance force applied to the shift drum 130 due to application of the rotational resistance force to the at least one segment 160 by an elastic force of the at least one segment biasing spring 172 in the intermediate rotation angle region ΔθN in shift down from the (n+1)-th speed stage to the n-th speed stage is larger than the maximum value of the rotational resistance force applied to the shift drum 130 due to the application of the rotational resistance force to the at least one segment 160 by the elastic force of the at least one segment biasing spring 172 in the intermediate rotation angle region ΔθN in shift up from the n-th speed stage to the (n+1)-th speed stage. The segment cam section 161 of the at least one segment 160 is arranged so that a change in the distance L from the drum rotational central axis C1 to a part of the segment cam section 161, which is in contact with the at least one segment pressing member 171, is different between shift down from the (n+1)-th speed stage to the n-th speed stage and shift up from the n-th speed stage to the (n+1)-th speed stage. The transmission 1 is arranged so that, when shifting down from the (n+1)-th speed stage to the n-th speed stage, in the intermediate rotation angle region ΔθN, the shift drum 130 receives, due to the elastic force of the at least one segment biasing spring 172, a rotational resistance force larger than the maximum value of the rotational resistance force applied to the shift drum 130 due to the elastic force of the at least one segment biasing spring 172 in the intermediate rotation angle region ΔθN in shift up from the n-th speed stage to the (n+1)-th speed stage to the n-th speed stage, and hence the rotation angle θ of the shift drum 130 is temporarily maintained to fall within the intermediate rotation angle region ΔθN. It is noted that, in the First Embodiment, changes of the torque T which is generated in the shift drum 130 by the elastic force of the at least one segment biasing spring 172 are not limited to the changes of the torque T shown in the graph of FIG. 1. With the arrangement of the transmission 1 of the First Embodiment, as compared to a case where a cam set is provided for each slider as in Patent Literature 1, it is possible to suppress upsizing of the transmission 1 that is capable of performing seamless shift up, and to simplify the structure for moving the slider 40 in the axial direction.

According to First Embodiment, when shifting up from the n-th speed stage to the (n+1)-th speed stage, the shift drum 130 continuously rotates without maintaining the rotation angle θ of the shift drum 130 to the intermediate rotation angle region ΔθN.

### <Second Embodiment>

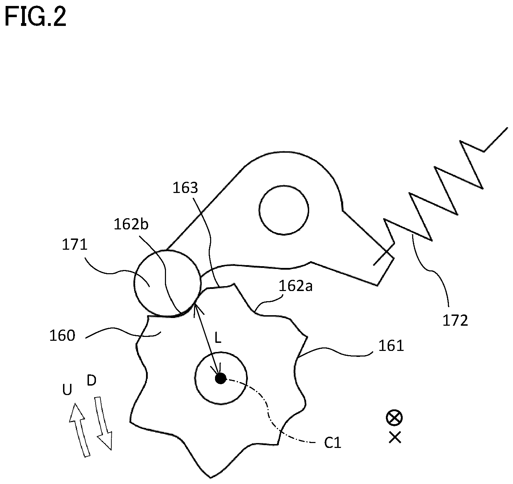

Hereinafter, the Second Embodiment of the present teaching will be described with reference to FIG. 2. FIG. 2 shows a part of an example of a transmission 1 of the Second Embodiment. The transmission 1 of the Second Embodiment has all features of the transmission 1 of the First Embodiment. The number of segments 160 in the transmission 1 of the Second Embodiment is one. The number of segment pressing member 171 is one and the number of segment biasing springs 172 is one too. A segment cam section 161 includes: an n-th speed stage recess 162a which makes contact with the segment pressing member 171 when the speed stage is an n-th speed stage; an (n+1)-th speed stage recess 162b which makes contact with the segment pressing member 171 when the speed stage is an (n+1)-th speed stage; and an intermediate maintaining portion 163 provided between the n-th speed stage recess 162a and the (n+1)-th speed stage recess 162b. The intermediate maintaining portion 163 is arranged to differentiate a change in a distance L from the drum rotational central axis C1 to a part of the intermediate maintaining portion 163, which is in contact with the segment pressing member 171, between shifting down and shifting up, so that the maximum value of the rotational resistance force applied to the shift drum 130 due to application of the rotational resistance force to the segment 160 by an elastic force of the segment biasing spring 172 in the intermediate rotation angle region ΔθN in shift down from the (n+1)-th speed stage to the n-th speed stage is larger than the maximum value of the rotational resistance force applied to the shift drum 130 due to the application of the rotational resistance force to the segment 160 by the elastic force of the segment biasing spring 172 in the intermediate rotation angle region ΔθN in shift up from the n-th speed stage to the (n+1)-th speed stage. The transmission 1 is arranged so that, when shifting down from the (n+1)-th speed stage to the n-th speed stage, in the intermediate rotation angle region ΔθN, the shift drum 130 receives, due to the elastic force of the segment biasing spring 172, a rotational resistance force larger than the maximum value of the rotational resistance force applied to the shift drum 130 due to the elastic force of the segment biasing spring 172 in the intermediate rotation angle region ΔθN during shift up from the n-th speed stage to the (n+1)-th speed stage to the n-th speed stage, the rotation angle θ of the shift drum 130 is temporarily maintained to fall within the intermediate rotation angle region ΔθN, while the segment pressing member 171 is in contact with the intermediate maintaining portion 163. The shape of the intermediate maintaining portion 163 is not limited to the shape shown in FIG. 2. With the transmission 1 of the Second Embodiment, as compared to a case where a cam set is provided for each slider as in Patent Literature 1, it is possible to suppress upsizing of the transmission 1 that is capable of seamlessly changing the speed stage, and to simplify the structure for moving the slider 40 in the axial direction.

### <Third Embodiment and Fourth Embodiment>

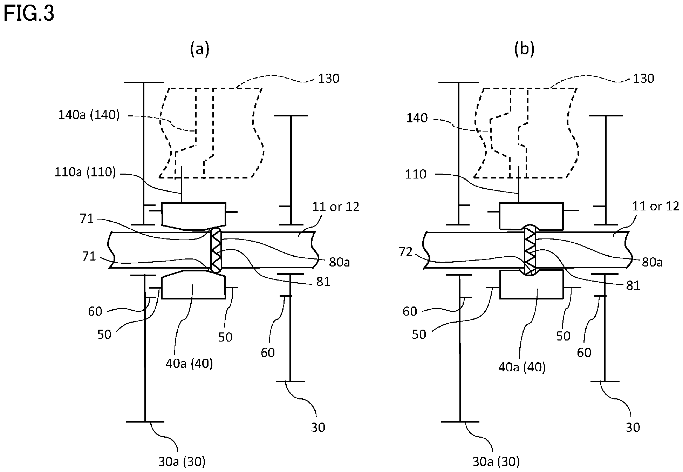

The following will describe the Third Embodiment and the Fourth Embodiment of the present teaching with reference to FIG. 3(a) and FIG. 3(b). FIG. 3(a) shows a part of an example of a transmission 1 of the Third Embodiment. FIG. 3(b) shows a part of an example of a transmission 1 of the Fourth Embodiment. The transmission 1 of each of the Third Embodiment and Fourth Embodiment has all features of the transmission 1 of the First Embodiment. The transmission 1 of each of the Third Embodiment and Fourth Embodiment is provided on the input shaft 11 or the output shaft 12 and includes a slider pressing member 80a that is in contact with the n-th speed stage slider 40. The slider pressing member 80a includes a slider biasing spring 81 which is configured to apply an elastic force to the n-th speed stage slider 40a in a radial direction away from the input shaft 11 or the output shaft 12. The structure of the slider pressing member 80a is not particularly limited.

The n-th speed stage slider 40a of the Third Embodiment includes a cam surface 71 which makes contact with the slider pressing member 80a when the speed stage is the n-th speed stage and which is arranged to convert an elastic force exerted by the slider pressing member 80a in the radial direction of the slider biasing spring 81 into a force acting in the axial direction. In the example shown in FIG. 3(a), the number of cam surfaces 71 formed in the n-th speed stage slider 40a to make contact with the slider pressing member 80a when the speed stage is the n-th speed stage is at least two. However, the number of cam surfaces 71 formed in the n-th speed stage slider 40a to make contact with the slider pressing member 80a when the speed stage is the n-th speed stage is not particularly limited. Among the shift members 110, an n-th speed stage shift member 110a moving in the axial direction integrally with the n-th speed stage shift member 110a is partially located in an n-th speed stage guide groove 140a among the guide grooves 140. The groove width of the n-th speed stage guide groove 140a is determined to allow the part of the n-th speed stage shift member 110a to move in the n-th speed stage guide groove 140a in the axial direction when shifting down from the (n+1)-th speed stage to the n-th speed stage. The transmission 1 of the Third Embodiment is arranged so that, when shifting down from the (n+1)-th speed stage to the n-th speed stage, the n-th speed stage slider 40a moves in the axial direction due to the contact between the n-th speed stage shift member 110a and the n-th speed stage guide groove 140a and then the n-th speed stage slider 40a moves in the axial direction as the cam surface 71 of the n-th speed stage slider 40a receives an elastic force of the slider biasing spring 81.

The n-th speed stage slider 40a of the Fourth Embodiment has a checking groove 72 in which the slider pressing member 80a is fitted when the speed stage is not the n-th speed stage. In the example shown in FIG. 3(b), at least two parts of the slider pressing member 80a are fitted in the checking groove 72, when the speed stage is not the n-th speed stage. The n-th speed stage slider 40a may have plural checking grooves 72 aligned in the circumferential direction, or may have a single checking groove 72 which is continuous in the circumferential direction. The checking groove 72 of the n-th speed stage slider 40a is arranged so that, when shifting down from the (n+1)-th speed stage to the n-th speed stage, a resistance is applied by an elastic force of the slider biasing spring 81 to the movement of the n-th speed stage slider 40a in the axial direction in a state in which the slider pressing member 80a is fitted in the checking groove 72. The transmission 1 of the Fourth Embodiment is arranged so that, when shifting down from the (n+1)-th speed stage to the n-th speed stage, a resistance is applied to the rotation in the direction D of the shift drum 130 by an elastic force of the slider biasing spring 81 in the intermediate rotation angle region ΔθN or a rotation angle region immediately after the intermediate rotation angle region ΔθN.

The transmission 1 of the Third Embodiment may have the features of the transmission 1 of the Fourth Embodiment. The transmission 1 of the Third Embodiment may not have the features of the transmission 1 of the Fourth Embodiment. The transmission 1 of the Fourth Embodiment may not have the features of the transmission 1 of the Third Embodiment.

### <Fifth Embodiment>

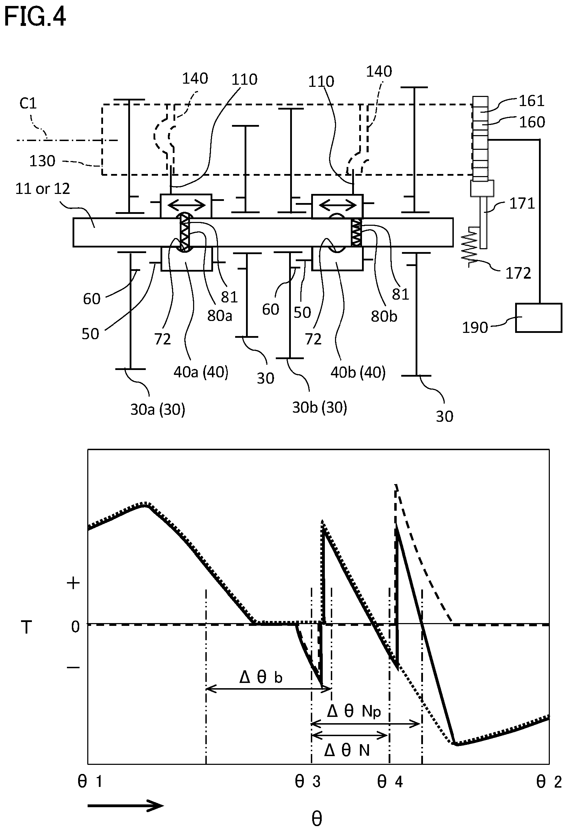

Hereinafter, the Fifth Embodiment of the present teaching will be described with reference to FIG. 4. FIG. 4 shows a part of an example of a transmission 1 of the Fifth Embodiment. In addition to the characteristics of the transmission 1 of the Fourth Embodiment, the transmission 1 of the Fifth Embodiment has features described below. The transmission 1 of the Fifth Embodiment is provided on the input shaft 11 or the output shaft 12 and includes a slider pressing member 80b that is in contact with an (n+1)-th speed stage slider 40b. The slider pressing member 80b includes a slider biasing spring 81 which is configured to apply an elastic force to the n-th speed stage slider 40a in a radial direction away from the input shaft 11 or the output shaft 12. While in FIG. 4 the n-th speed stage slider 40a and the (n+1)-th speed stage slider 40b are provided on the same shaft, these sliders may be provided on different shafts. The (n+1)-th speed stage slider 40b has a checking groove 72 in which the slider pressing member 80b is fitted when the speed stage is not the (n+1)-th speed stage. The checking groove 72 of the (n+1)-th speed stage slider 40b is arranged so that, when shifting up from the n-th speed stage to the (n+1)-th speed stage, a resistance is applied by an elastic force of the slider biasing spring 81 of the slider pressing member 80b to the movement of the (n+1)-th speed stage slider 40b in the axial direction in a state in which the slider pressing member 80b is fitted in the checking groove 72. In shift down from the (n+1)-th speed stage to the n-th speed stage, when the slider pressing member 80b enters the checking groove 72, the elastic force of the slider biasing spring 81 of the slider pressing member 80b acts as a force of moving the slide gear 42 in the axial direction until a state in which the slider pressing member 80b is fitted in the checking groove 72 is established. As a result, the elastic force of the slider biasing spring 81 of the slider pressing member 80b acts as a force of rotating the shift drum 130 in the direction D.

FIG. 4 includes a graph showing changes of a torque T which is generated in the shift drum 130 by an elastic force of the at least one segment biasing spring 172 and the slider biasing spring 81 when shifting down from the (n+1)-th speed stage to the n-th speed stage. To be precise, the graph in FIG. 4 shows (i) a torque generated by an elastic force of the at least one segment biasing spring 172, (ii) a torque generated in the shift drum 130 by an elastic force of the slider biasing spring 81 of each of the slider pressing members 80a and 80b in relation to the checking groove 72 of each of the n-th speed stage slider 40a and the (n+1)-th speed stage slider 40b, and (iii) a synthetic torque generated by synthesizing the torques (i) and (ii). A torque T corresponding to a positive value on the vertical axis indicates a rotation resistance torque applying resistance to the rotation of the shift drum 130 in the direction D. A torque T corresponding to a negative value on the vertical axis indicates a rotation driving torque rotating the shift drum 130 in the direction D. A solid line in the graph of FIG. 4 indicates the synthetic torque. A dotted line in the graph of FIG. 4 indicates a torque which is generated in the shift drum 130 by an elastic force of the at least one segment biasing spring 172. A dashed line in FIG. 4 indicates a torque generated in the shift drum 130 by an elastic force of the slider biasing spring 81 of each of the slider pressing members 80a and 80b in relation to the checking groove 72 of each of the n-th speed stage slider 40a and the (n+1)-th speed stage slider 40b. A rotation angle region Δθb in FIG. 4 indicates an example of a rotation angle region of the shift drum 130 during a period in which the (n+1)-th speed stage slider 40b is moving in the axial direction in the shift down to the n-th speed stage. While in FIG. 4 an intermediate rotation speed region ΔθN partially overlaps the rotation angle region Δθb, these regions may not overlap.

As the shift drum 130 starts to rotate in the direction D from the first rotation angle θ1 due to the operation of the shift actuator 190, a rotation resistance torque is generated by an elastic force of the segment biasing spring 172, as indicated in the graph of FIG. 4. Thereafter, a state in which neither a torque generated by the elastic force of the segment biasing spring 172 nor a torque generated by the elastic force of the slider biasing spring 81 in relation to the checking groove 72 is generated is established. Then a rotation driving torque is generated by the elastic force of the slider biasing spring 81 of the slider pressing member 80b in relation to the checking groove 72. This rotation driving torque is generated when the (n+1)-th speed stage slider 40b moves in the axial direction and the slider pressing member 80b enters the checking groove 72 of the (n+1)-th speed stage slider 40b. Thereafter, a rotation resistance torque is generated again by the elastic force of the segment biasing spring 172 from a rotation angle θ that is substantially identical with a rotation angle θ at which the torque becomes no longer generated by the elastic force of the slider biasing spring 81 of the slider pressing member 80b in relation to the checking groove 72. Thereafter, the torque generated by the elastic force of the segment biasing spring 172 is changed from the rotation resistance torque to the rotation driving torque. While the rotation driving torque is generated by the elastic force of the segment biasing spring 172, the rotation resistance torque is generated by the elastic force of the slider biasing spring 81 of the slider pressing member 80a in relation to the checking groove 72. This rotation resistance torque is generated when the slider pressing member 80a moves out from the checking groove 72 of the n-th speed stage slider 40a as the n-th speed stage slider 40a starts to move in the axial direction.

As such, when shifting down from the (n+1)-th speed stage to the n-th speed stage, the elastic force of the slider biasing spring 81 of the slider pressing member 80a applies a resistance to the movement in the axial direction of the n-th speed stage slider 40a in the state in which the slider pressing member 80a is fitted in the checking groove 72. On this account, as shown in, for example, the graph of FIG. 4, when shifting down from the (n+1)-th speed stage to the n-th speed stage, a resistance is applied to the rotation of the shift drum 130 by the elastic force of the slider biasing spring 81, in a rotation angle region immediately after the intermediate rotation angle region ΔθN. Due to this, in a rotation angle region ΔθNp that is wider than the intermediate rotation angle region ΔθN on the second rotation angle θ2 side, a resistance is applied to the rotation of the shift drum 130. Consequently, it becomes easy to perform the control of changing the relative rotation speed between the n-th gear 30a and the n-th speed stage slider 40a, which starts in the intermediate rotation angle region ΔθN. Furthermore, the rotation angle of the shift drum 130 can be further reliably maintained in the intermediate rotation angle region ΔθN. It is noted that the changes of the torque T which is generated in the shift drum 130 by the elastic force of the slider biasing spring 81 of each of the slider pressing members 80a and 80b in relation to the checking groove 72 when shifting down to the n-th speed stage are not limited to the changes of the torque T shown in the graph of FIG. 4. The transmission 1 of the Fifth Embodiment may be arranged such that, when shifting down from the (n+1)-th speed stage to the n-th speed stage, in the intermediate rotation angle region ΔθN, the elastic force of the slider biasing spring 81 applies a resistance to the rotation of the shift drum 130. In this case, the rotation angle of the shift drum 130 can be further reliably maintained in the intermediate rotation angle region ΔθN.

### <Sixth Embodiment and Seventh Embodiment>

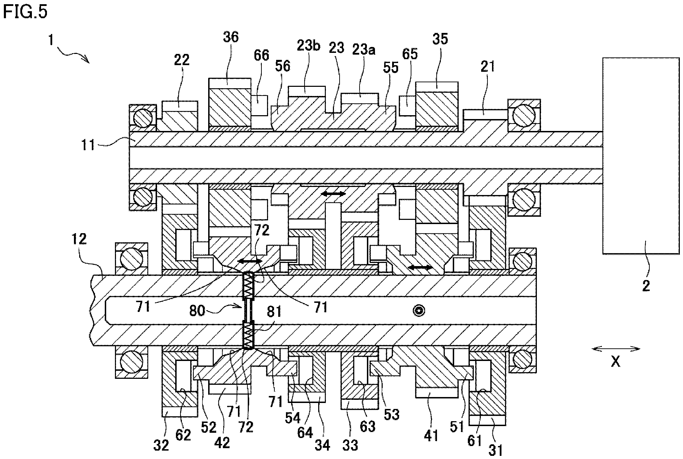

The following will describe the Sixth Embodiment and the Seventh Embodiment of the present teaching with reference to FIG. 5 to FIG. 14. The transmission 1 of each of the Sixth Embodiment and the Seventh Embodiment has all features of the transmission 1 of the First Embodiment. Unless otherwise specified, the following will describe features that are shared between the Sixth Embodiment and the Seventh Embodiment. The transmission 1 is mounted on a vehicle such as a motorcycle. The vehicle includes a driving source (not illustrated), the transmission 1, a clutch 2, and a controller (not illustrated). The driving source is, for example, an engine or a combination of an engine and an electric motor. The driving force generated by the driving source is transmitted to a wheel through the clutch 2 and the transmission 1. The controller controls the driving source, the transmission 1, and the clutch 2.

The transmission 1 includes an input shaft 11 and an output shaft 12. The transmission 1 is configured to be able to transmit power of the input shaft 11 to the output shaft 12. The ratio of the rotational speed of the input shaft 11 to the rotation speed of the output shaft 12 is termed a transmission ratio. A change of the transmission ratio to increase the transmission ratio is referred to as shift down. The transmission 1 has plural speed stages (gear positions) that are different in transmission ratio. The speed stage of the transmission 1 is changed by the controller. The vehicle may include a shift operator (not illustrated) that is operated by the driver to change the speed stage of the transmission 1. The controller changes the speed stage of the transmission 1 in accordance with an operation of the shift operator. The controller may be arranged to be able to automatically change the speed stage of the transmission 1 in accordance with, for example, the vehicle speed, when the shift operator is not operated. The vehicle may not include a shift operator that is operated by the driver to change the speed stage of the transmission 1.

The input shaft 11 is connected to the driving source through the clutch 2. When the driving source is an engine, the input shaft 11 is connected to a crankshaft (not illustrated) of the engine through the clutch 2. The clutch 2 is a friction clutch, for example, but is not limited to this. However, the clutch 2 is not a dual clutch. In other words, the transmission 1 is not a dual clutch transmission. The transmission 1 is an AMT (Automated Manual Transmission). In other words, the controller is arranged to be able to automatically change the power transmission ratio of the clutch 2 without requiring an operation by the driver. The controller may control at least one of the clutch 2 or the driving source when changing the speed stage of the transmission 1.

The transmission 1 is a six-speed transmission. On the input shaft 11, a gear 21, a fifth speed gear 35, a slide gear 23, a sixth speed gear 36, and a gear 22 are provided in this order from right to left in FIG. 5. On the output shaft 12, a first speed gear 31, a slide gear 41, a third speed gear 33, a fourth speed gear 34, a slide gear 42, and a second speed gear 32 are provided in this order from right to left in FIG. 5. The first speed gear 31, the second speed gear 32, the third speed gear 33, the fourth speed gear 34, the fifth speed gear 35, and the sixth speed gear 36 may be collectively termed shift gears 31 to 36. The shift gears 31 to 34 are supported by the output shaft 12 to be rotatable relative to the output shaft 12 and to be immovable in the axial direction. The shift gears 35 and 36 are supported by the input shaft 11 to be rotatable relative to the input shaft 11 and to be immovable in the axial direction. The slide gear 23 includes a gear 23a and a gear 23b. The slide gear 23 is supported by the input shaft 11 to be rotatable together with the input shaft 11 and to be movable in the axial direction. The slide gear 41 and the slide gear 42 are supported by the output shaft 12 to be rotatable together with the output shaft 12 and to be movable in the axial direction. The gear 21 is integrally molded with the input shaft 11. The gear 22 is supported by the input shaft 11 to be rotatable together with the input shaft 11 and to be immovable in the axial direction. The six gears 21, 35, 23a, 23b, 36, and 22 of the input shaft 11 always mesh with the six gears 31, 41, 33, 34, 42, and 32 of the output shaft 12, respectively. The shift gears 31 to 36 are specific examples of the shift gears 30 of the First Embodiment. The slide gears 41, 42, and 23 are specific examples of the sliders 40 of the First Embodiment.

The slide gear 41 has dogs 51 that are provided at an end portion opposing the first speed gear 31 in the axial direction. The first speed gear 31 has dogs 61 that are able to mesh with the dogs 51 of the slide gear 41. The slide gear 41 has dogs 53 that are provided at an end portion opposing the third speed gear 33 in the axial direction. The third speed gear 33 has dogs 63 that are able to mesh with the dogs 53 of the slide gear 41. The slide gear 42 has dogs 52 that are provided at an end portion opposing the second speed gear 32 in the axial direction. The second speed gear 32 has dogs 62 that are able to mesh with the dogs 52 of the slide gear 42. The slide gear 42 has dogs 54 that are provided at an end portion opposing the fourth speed gear 34 in the axial direction. The fourth speed gear 34 has dogs 64 that are able to mesh with the dogs 54 of the slide gear 42. The slide gear 23 has dogs 55 that are provided at an end portion opposing the fifth speed gear 35 in the axial direction. The fifth speed gear 35 has dogs 65 that are able to mesh with the dogs 55 of the slide gear 23. The slide gear 23 has dogs 56 that are provided at an end portion opposing the sixth speed gear 36 in the axial direction. The sixth speed gear 36 has dogs 66 that are able to mesh with the dogs 56 of the slide gear 23.

As the slide gears (sliders) 23, 41, and 42 are moved in the axial direction from the position shown in FIG. 5, each of the slide gears 23, 41, and 42 can mesh with one of the shift gears 31 to 36 adjacent to the each slide gear in the axial direction, by means of the dogs. When one of the shift gears 31 to 36 meshes with a slide gear adjacent to the one shift gear in the axial direction by means of the dogs, power is transmitted from the input shaft 11 to the output shaft 12 through that shift gear and that slide gear. For example, when the first speed gear 31 meshes with the slide gear 41, the power from the input shaft 11 is transmitted to the gear 21, the first speed gear 31, the slide gear 41, and then the output shaft 12 in order. The speed stage of the transmission 1 in this case is the first speed stage. For example, when the third speed gear 33 meshes with the slide gear 41, the power from the input shaft 11 is transmitted to the slide gear 23, the third speed gear 33, the slide gear 41, and then the output shaft 12 in order. The speed stage of the transmission 1 in this case is the third speed stage. For example, when the fifth speed gear 35 meshes with the slide gear 23, the power from the input shaft 11 is transmitted to the slide gear 23, the fifth speed gear 35, the slide gear 41, and then the output shaft 12 in order. The speed stage of the transmission 1 in this case is the fifth speed stage. When none of the shift gears meshes with a slide gear adjacent to each shift gear in the axial direction, the transmission 1 is in a neutral state. As the movement of the slide gears 23, 41, and 42 in the axial direction is controlled, the speed stage of the transmission 1 is controlled. In other words, the slide gears 23, 41, and 42 are driven in the axial direction in order to change the speed stage.

The dogs 51 are aligned in the circumferential direction. The dogs 52 to 56 and 61 to 66 are also aligned in the circumferential direction. The dogs 51 to 56 of the slide gears 41, 42, and 23 are dog teeth. In other words, the dogs 51 to 56 are formed to protrude in the axial direction. The dogs 61 to 64 of the shift gears 31 to 34 are dog holes. The dogs 61 to 64 are concave in shape. In other words, the dogs 61 to 64 are dog holes that do not penetrate the shift gears 31 to 34 in the axial direction. The dogs 61 to 64 may be dog holes penetrating the shift gears 31 to 36 in the axial direction. The dogs 61 to 64 may be dog teeth. In this case, the dogs 51 to 54 may be dog teeth or dog holes. The dogs 65 and 66 of the shift gears 35 and 36 are dog teeth. The dogs 65 and 66 may be dog holes.

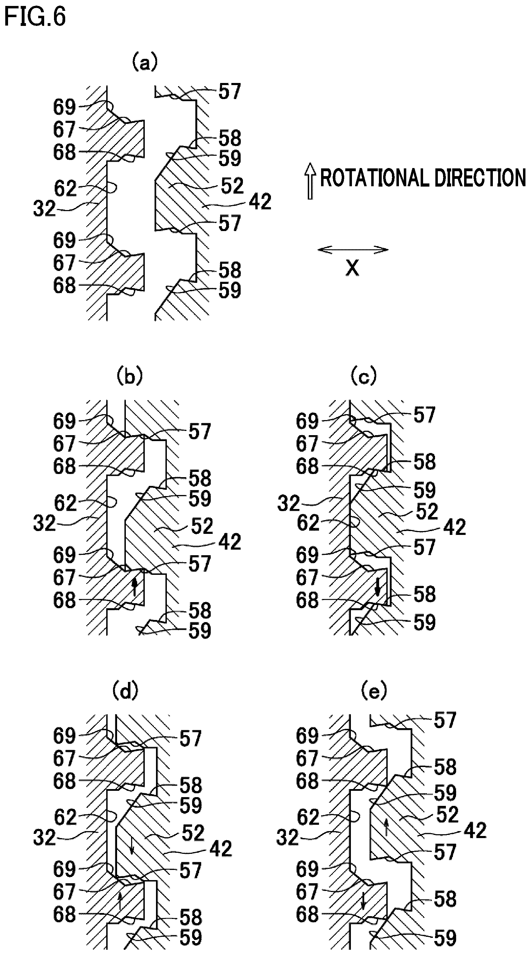

The following will describe common characteristics of the dogs (dog holes) 61 to 64 of the shift gears 31 to 34 and common characteristics of the dogs (dog teeth) 51 to 54 of the slide gears 41 and 42, by taking the dog 62 of the second speed gear 32 and the dog 52 of the slide gear 42 as an example. FIG. 6(a) to FIG. 6(e) are developed sectional views of the second speed gear 32 and the slide gear 42. The up-down direction in each of FIG. 6(a) to FIG. 6(e) indicates the circumferential direction about the rotational central axis of the output shaft 12. The rotational direction of each of the shift gear 32 and the slide gear 42 is an upward direction in FIG. 6(a) to FIG. 6(e). FIG. 6(a) shows a state in which the transmission 1 is at a speed stage different from the second speed stage or at the neutral position. The arrows in FIG. 6(b) and FIG. 6(c) show the direction of the torque generated in the shift gear 32. The arrows in FIG. 6(d) and FIG. 6(e) show the rotational direction of the slide gear 42 relative to the shift gear 32 and the rotational direction of the shift gear 32 relative to the slide gear 42.

The dog (dog tooth) 52 has a drive meshing surface 57, a coast meshing surface 58, and a release guide surface 59. In the axial direction, the drive meshing surface 57 is close to the tip of the teeth as compared to the coast meshing surface 58. The drive meshing surface 57 is tilted in the circumferential direction relative to the axial direction. The drive meshing surface 57 is tilted so that one end of the surface close to the bottom of the teeth is on the downstream in the rotational direction of the shift gear 32 and the slide gear 42 as compared to the other end of the surface far from the bottom of the teeth. The drive meshing surface 57 may be formed to extend along the axial direction. The coast meshing surface 58 is tilted in the circumferential direction relative to the axial direction. The coast meshing surface 58 is tilted so that one end of the surface close to the tip of the teeth is on the downstream in the rotational direction of the shift gear 32 and the slide gear 42 as compared to the other end of the surface far from the tip of the teeth. The coast meshing surface 58 may be formed to extend along the axial direction. The release guide surface 59 is aligned with the drive meshing surface 57 in the circumferential direction. The release guide surface 59 is tilted in the axial direction relative to the circumferential direction. The release guide surface 59 may be spiral in shape relative to the rotational central axis of the output shaft 12, or may extend along the radial direction.

The dog (dog hole) 62 has a drive meshing surface 67, a coast meshing surface 68, and a movement guiding surface 69. The tilt angle and the tilting direction of the drive meshing surface 67 relative to the axial direction are identical with those of the drive meshing surface 57 of the dog 52. The tilt angle and the tilting direction of the coast meshing surface 68 relative to the axial direction are identical with those of the coast meshing surface 58 of the dog 52. The movement guiding surface 69 is tilted in the axial direction relative to the circumferential direction. The movement guiding surface 69 may be spiral in shape relative to the rotational central axis of the output shaft 12, or may extend along the radial direction.

FIG. 6(b) shows a state in which the drive meshing surface 57 is in contact with the drive meshing surface 67 and the dog 52 meshes with the dog 62. This meshed state will be referred to as a drive meshed state. The position in the axial direction of the slide gear 42 when the slide gear 42 and the shift gear 32 are in the drive meshed state will be referred to as the drive meshed position of the slide gear 42 relative to the shift gear 32. It is noted that the term "drive meshed position" is used no matter whether the drive meshed state is established. When the transmission 1 transmits a drive torque with the second speed stage, the shift gear 32 and the slide gear 42 are in the drive meshed state. The drive torque is a torque transmitted from a driving source to a wheel when the driving source drives the wheel.

FIG. 6(c) shows a state in which the coast meshing surface 58 is in contact with the coast meshing surface 68 and the dog 52 meshs with the dog 62. This meshed state will be referred to as a coast meshed state. In the coast meshed state, the dogs 52 and 62 deeply mesh with each other as compared to the drive meshed state. The position in the axial direction of the slide gear 42 when the slide gear 42 and the shift gear 32 are in the coast meshed state will be referred to as the coast meshed position of the slide gear 42 relative to the shift gear 32. It is noted that the term "coast meshed position" is used no matter whether the coast meshed state is established. When the transmission 1 transmits a coast torque with the second speed stage, the shift gear 32 and the slide gear 42 are in the coast meshed state. The coast torque is a torque generated by the rotational inertia of the wheel and is exerted in the direction opposite to the drive torque. The coast torque is a torque transmitted between the driving source and the wheel. The coast torque is generated when, for example, engine braking is performed.

FIG. 6(d) shows a state in which an edge of the dog (dog tooth) 52 is in contact with the movement guiding surface 69. As shown in FIG. 6(d), when the edge of the dog 52 makes contact with the movement guiding surface 69 while the slide gear 42 rotates at a lower speed than the shift gear 32, the slide gear 42 receives a force acting away from the shift gear 32. When the transmission 1 is at the second speed stage and the torque transmitted to the transmission 1 is switched from the coast torque to the drive torque, the slide gear 42 rotates at a lower speed than the shift gear 32. Due to this, the meshing between the coast meshing surfaces 58 and 68 of the slide gear 42 and the shift gear 32 is canceled, and the dog 52 of the slide gear 42 makes contact with the movement guiding surface 69 of the shift gear 32. The dog 52 moves along the movement guiding surface 69, and the slide gear 42 and the shift gear 32 become in the drive meshed state. When the transmission 1 is at the second speed stage and the torque transmitted to the transmission 1 is switched from the drive torque to the coast torque, the slide gear 42 rotates at a speed higher than the shift gear 32. As a result, the meshing between the drive meshing surfaces 57 and 67 of the slide gear 42 and the shift gear 32 is canceled. On account of the elastic force exerted by the slide gear biasing spring 81 of a later-described slide gear pressing member 80 in contact with a later-described cam surface 71, the slide gear 42 moves in a direction in which the slide gear 42 further deeply meshes, with the result that the slide gear 42 and the shift gear 32 become in the coast meshed state.

FIG. 6(e) shows a state in which the edge of the dog (dog hole) 62 is in contact with the release guide surface 59. As shown in FIG. 6(e), when the edge of the dog 62 makes contact with the release guide surface 59 while the slide gear 42 rotates at a higher speed than the shift gear 32, the slide gear 42 receives a force acting away from the shift gear 32. To put it differently, when the dog 62 makes contact with the release guide surface 59, the force by which the meshing between the dogs 52 and 62 of the shift gear 32 and the slide gear 42 is canceled is generated in the slide gear 42. As detailed later, the release guide surface 59 is used when the speed is changed.

The dogs (dog holes) 61 to 64 may be different from one another in shape, as long as they share the above-described common characteristics. At least two of or all of the dogs 61 to 64 may be symmetrical in shape. The dogs (dog teeth) 51 to 54 may be different from one another in shape. At least two of or all of the dogs 51 to 54 may be symmetrical in shape. The dogs (dog teeth) 51 to 54 are different from the dogs (dog teeth) 55 and 56 in shape. The dogs (dog teeth) 55 and 56 may be different in shape, identical in shape, or symmetrical in shape. The dogs (dog teeth) 65 and 66 may be different in shape, identical in shape, or symmetrical in shape. The dogs (dog teeth) 65 and 66 may be different from the dogs (dog teeth) 55 and 56 in shape, identical in shape, or symmetrical in shape.

Each of the dogs 51 to 54 of the slide gears 41 and 42 has the release guide surface 59, whereas each of the dogs 61 to 64 of the shift gears 31 to 34 has the movement guiding surface 69. Each of the dogs of the slide gears 41 and 42 may have both the movement guiding surface and the release guide surface as in the dog of the slider of Patent Literature 1. The dog 54 of the slide gear 42 may not have the release guide surface 59. Each of the dogs 64 of the fourth speed gear 34 and the dogs 54 of the slide gear 42 may not have the movement guiding surface. The shape of each of the dogs 64 of the fourth speed gear 34 and the dogs 54 of the slide gear 42 may be identical with the shape of each of the dogs 65 and 66 of the shift gears 35 and 36 and the dogs 55 and 56 of the slide gear 23.

The transmission 1 is arranged so that, when shifting up, the transmission 1 is temporarily in a double-meshed state where the two slide gears 41 and 42 simultaneously mesh with two of the shift gears 31 to 34 through dogs. For example, when shifting up from the first speed stage to the second speed stage, the transmission 1 is temporarily in the double-meshed state where the two slide gears 41 and 42 simultaneously mesh with the shift gears 31 and 32 through the dogs 51, 52, 61, and 62. When the slide gear 42 meshes with the second speed gear 32 through the dogs 52 and 62, the slide gear 41 rotates at a higher speed than the first speed gear 31. The transmission 1 is arranged so that the movement of the slide gear 41 in the axial direction toward the first speed gear 31 is restricted in this case. As a result, the release guide surface 59 of the dog 51 of the slide gear 41 makes contact with the dog 61 of the first speed gear 31 and hence the slide gear 41 moves away from the first speed gear 31 in the axial direction. Due to this, the meshing between the dog 51 of the slide gear 41 and the dog 61 of the first speed gear 31 is canceled. On this account, being different from the controller of the known transmission, the controller is not required to control the clutch 2 and the driving source in order to reduce the pressing force generated in accordance with the power transmission between the dog 51 of the slide gear 41 and the dog 61 of the first speed gear 31. As such, the transmission 1 is arranged so that a force of canceling the meshing of the dogs is generated in one of the two slide gears 41 and 42, when the double-meshed state is established. The transmission 1 is therefore able to seamlessly perform shift up to the second speed stage without blocking the power transmission. Likewise, the transmission 1 is able to seamlessly perform shift up to the third speed stage and the fourth speed stage without blocking the power transmission. The transmission 1 is arranged so that the double-meshed state is not established when shifting down.

The following will describe the common characteristics of the slide gears 41 and 42 apart from the dogs, by taking the slide gear 42 as an example. The slide gears 41 and 42 may be different from one another in shape, as long as they share the below-described common characteristics. The slide gears 41 and 42 may be symmetrical in shape.

The slide gear 42 is spline-fitted with the output shaft 12. As shown in FIG. 5, in the inner circumferential surface of the slide gear 42, four cam surfaces 71 and two checking grooves 72 are formed. Each checking groove 72 is formed between two cam surfaces 71 that are aligned in the axial direction. The checking groove 72 may not be formed. The slide gear 42 makes contact with a slide gear pressing member 80 provided on the output shaft 12. The slide gear pressing member 80 makes contact with the four cam surfaces 71 and the two checking grooves 72. The slide gear pressing member 80 simultaneously makes contact with two cam surfaces 71 aligned in the circumferential direction among the four cam surfaces 71. The number of cam surfaces 71 formed to be aligned in the circumferential direction is not limited to two, and may be three or more. The number of checking grooves 72 formed to be aligned in the circumferential direction is not limited to two, and may be three or more. The checking grooves 72 may be a single groove that is continuous in the circumferential direction. The slide gear pressing member 80 has a slide gear biasing spring 81 which applies an elastic force to the slide gear 42 outward in the radial direction of the output shaft 12. The slide gear pressing member 80 is equivalent to a slider pressing member of the present teaching, and the slide gear biasing spring 81 is equivalent to a slider biasing spring of the present teaching.

The cam surface 71 is a slope surface tilted in the radial direction relative to the axial direction. When the slide gear 42 moves in the axial direction, the slide gear pressing member 80 makes contact with the cam surface 71. The cam surface 71 is configured to convert an elastic force exerted in the radial direction from the slide gear pressing member 80 to a force in the axial direction. When the slide gear pressing member 80 makes contact with the cam surface 71, the elastic force of the slide gear biasing spring 81 acts as a force of pressing the slide gear 42 in the axial direction in which the checking groove 72 moves away from the slide gear pressing member 80. The checking groove 72 is formed to allow the slide gear pressing member 80 to be fitted therein. When the transmission 1 is in neither the second speed stage nor the fourth speed stage, the slide gear pressing member 80 is fitted in the checking groove 72 of the slide gear 42. The elastic force of the slide gear biasing spring 81 acts as resistance to the movement in the axial direction of the slide gear 42 in a state in which the slide gear pressing member 80 is fitted in the checking groove 72. When the slide gear pressing member 80 enters the checking groove 72, the elastic force of the slide gear biasing spring 81 acts as a force moving the slide gear 42 in the axial direction until the slide gear pressing member 80 is fitted in the checking groove 72.

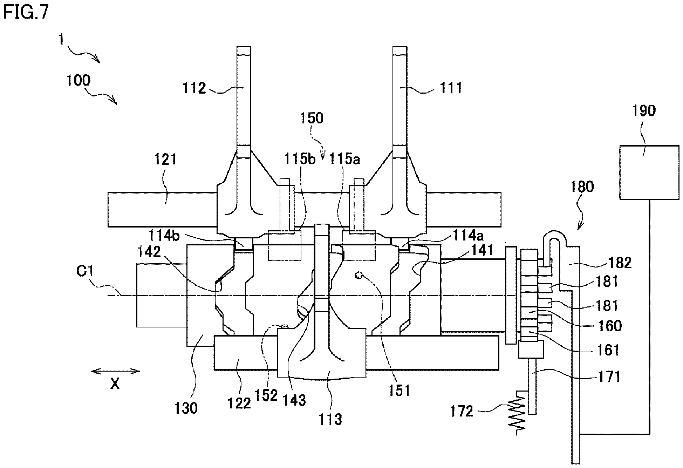

As shown in FIG. 7, the transmission 1 includes a shift mechanism 100 by which the slide gears 41, 42, and 23 is moved in the axial direction. The transmission 1 is a sequential manual transmission. In other words, the transmission 1 is arranged so that, when the speed stage (gear position) is changed, the speed stage is changeable to only a speed stage that is adjacent to the speed stage before the change in terms of the transmission ratio. The shift mechanism 100 includes shift members 111, 112, and 113, shift fork guide shafts 121 and 122, a shift drum 130, a segment 160, a segment pressing member 171, a segment biasing spring 172, a shift power transmission unit 180, and a shift actuator 190. The shift members 111, 112, and 113 are specific examples of the shift members 110 of the First Embodiment. The shift members 111, 112, and 113 in the Sixth Embodiment and the Seventh Embodiment are constituted by shift forks. The shift power transmission unit 180 is configured to transmit power from the shift actuator 190 to the shift drum 130. The speed stage is changed by the rotation of the shift drum 130. The shift actuator 190 is controlled by a controller.

The shift members 111, 112, and 113 are connected to the slide gears 41, 42, and 23 to be movable in the axial direction integrally with the respective slide gears 41, 42, and 23. To be more specific, the shift members 111, 112, and 113 are fitted in annular grooves formed in the outer circumferential portions of the slide gears 41, 42, and 23. The shift members 111 and 112 that are shift forks are supported by the shift fork guide shaft 121 to be movable in the axial direction. The shift member 113 that is a shift fork is supported by the shift fork guide shaft 122 to be movable in the axial direction.

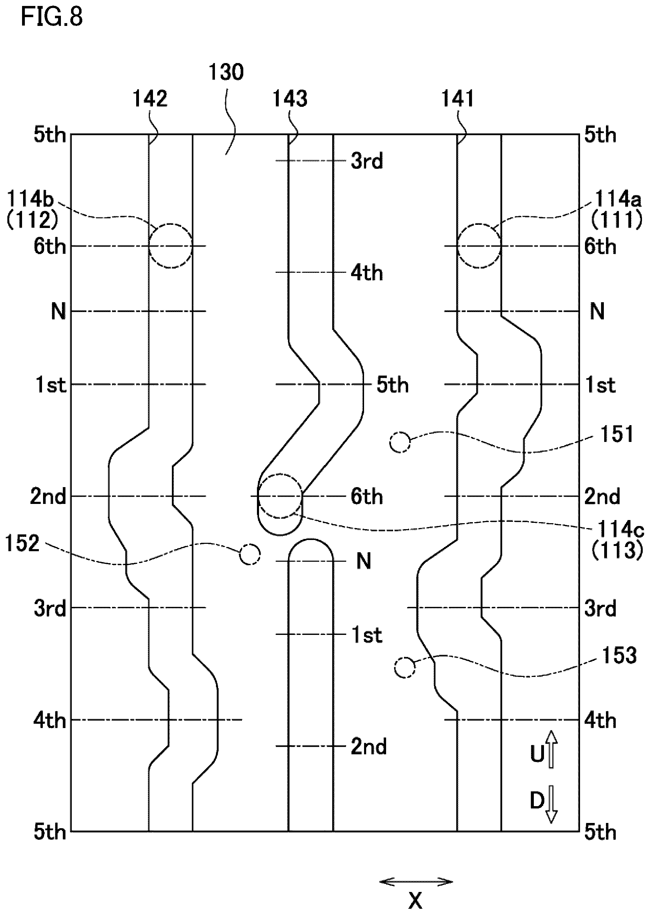

The shift drum 130 moves the shift members 111, 112, and 113 in the axial direction by rotating about a drum rotational central axis C1 that is in parallel to the axial direction. FIG. 8 is a developed view of the outer circumferential portion of the shift drum 130. The up-down direction in FIG. 8 is equivalent to the circumferential direction of the shift drum 130.

As shown in FIG. 7 and FIG. 8, the shift drum 130 has three guide grooves 141, 142, and 143 in the outer circumferential portion. The shift members 111, 112, and 113 has pin portions 114a, 114b, and 114c located in the respective guide grooves 141, 142, and 143. The guide grooves 141, 142, and 143 have portions that are tilted in the axial direction relative to the circumferential direction. When the shift drum 130 rotates, the shift members 111, 112, and 113 move in the axial direction in accordance with the positions of the guide grooves 141, 142, and 143 with which the pin portions 114a, 114b, and 114c are in contact. The relationship between the positions of the pin portions 114a, 114b, and 114c in the guide grooves 141, 142, and 143 and the speed stages of the transmission 1 is shown in FIG. 8. The guide groove 141 and the pin portion 114a are provided for the first speed stage and the third speed stage. The guide groove 142 and the pin portion 114b are provided for the second speed stage and the fourth speed stage. The guide groove 143 and the pin portion 114c are provided for the fifth speed stage and the sixth speed stage.

As indicated by a two-dot chain line in FIG. 7, the transmission 1 of the Seventh Embodiment includes an auxiliary movement mechanism 150. The transmission 1 of the Sixth Embodiment does not include the auxiliary movement mechanism 150. The auxiliary movement mechanism 150 is provided to move the shift members 111 and 112 in the axial direction separately from the movement in the axial direction of the shift members 111 and 112 due to the contact between the guide grooves 141 and 142 and the pin portions 114a and 114b, when shifting down. The auxiliary movement mechanism 150 is used also for moving the slide gears 41 and 42 from the drive meshed position to the coast meshed position. The auxiliary movement mechanism 150 includes three protrusions 151 to 153 (see FIG. 8) provided on the shift drum 130 and two auxiliary guide portions 115a and 115b (see FIG. 7) provided on the shift members 111 and 112, respectively. Each of the auxiliary guide portions 115a and 115b includes at least one slope surface. When the shift drum 130 rotates for shifting down, the protrusions 151 to 153 make contact with the slope surfaces of the auxiliary guide portions 115a and 115b, with the result that the shift members 111 and 112 move in the axial direction. Each of the auxiliary guide portions 115a and 115b is partially arranged to be swingable. When the shift drum 130 rotates for shifting up, the auxiliary guide portions 115a and 115b swing as they partially make contact with the protrusions 151 to 153. This swing does not cause the movement of the shift members 111 and 112 in the axial direction.

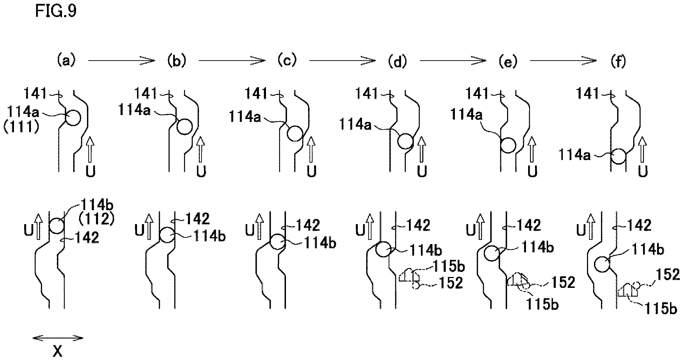

The following will describe movement of the shift members 111 and 112 and the slide gears 41 and 42 when drive shift up from the first speed stage to the second speed stage is performed, with reference to FIG. 9(a) to FIG. 9(f). The drive shift up is shift up by which a drive torque is transmitted by the transmission 1 at the start and finish of shift up. An outlined arrow U in FIG. 9 indicates the rotational direction of the shift drum 130. In FIG. 9(a) to FIG. 9(f), the auxiliary guide portion 115a and the protrusion 151 are not shown. In FIG. 9(a) to FIG. 9(c), furthermore, the auxiliary guide portion 115b and the protrusion 152 are not shown. FIG. 9(a) shows a state in which the drive shift up starts, whereas FIG. 9(f) shows a state in which the drive shift up finishes. In FIG. 9(a), the slide gear 41 connected to the shift member 111 and the first speed gear 31 are in the drive meshed state. When the clutch 2 is in the connection state, the controller starts the rotation in the direction U of the shift drum 130 by driving the shift actuator 190 in the state shown in FIG. 9(a). As shown in FIG. 9(c) to FIG. 9(e), the shift member 112 moves in the axial direction as the pin portion 114b makes contact with the guide groove 142. As a result, the slide gear 42 and the second speed gear 32 become in the drive meshed state. In the Seventh Embodiment, as shown in FIG. 9(e), the auxiliary guide portion 115b of the shift member 112 partially makes contact with the protrusion 152 and swings. On the other hand, the pin portion 114a of the shift member 111 moves in the circumferential direction relative to the guide groove 141, as shown in FIG. 9(a) to FIG. 9(d). In FIG. 9(d), because an end portion in the axial direction of the pin portion 114a makes contact with the guide groove 141, movement of the slide gear 41 in the axial direction toward the first speed gear 31 is restricted. In FIG. 9(d), the transmission 1 is in the double-meshed state. On this account, while the movement of the slide gear 41 in the axial direction toward the first speed gear 31 is restricted, the slide gear 41 rotates at a higher speed than the first speed gear 31. As a result, due to the contact between the release guide surface 59 of the dog 51 of the slide gear 41 and the dog 61 of the first speed gear 31, the slide gear 41 moves away from the first speed gear 31 against the elastic force exerted by the slide gear biasing spring 81 of the slide gear pressing member 80 in contact with the cam surface 71. Accordingly, as shown in FIG. 9(d) and FIG. 9(e), the shift member 111 moves in the axial direction. In FIG. 9(e), the meshing between the slide gear 41 and the first speed gear 31 has been canceled.

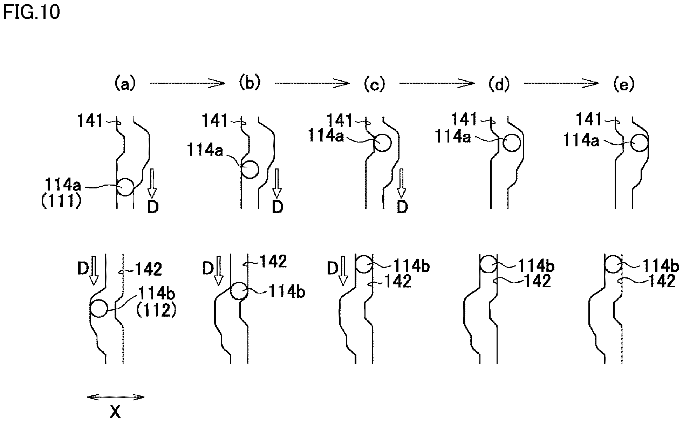

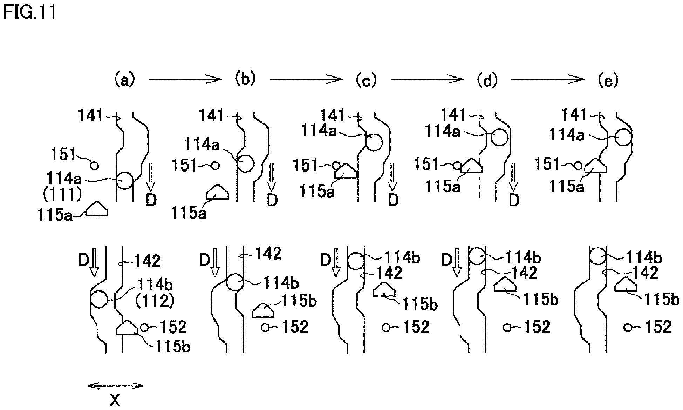

The following will describe movement of the shift members 111 and 112 and the slide gears 41 and 42 when a coast shift down from the second speed stage to the first speed stage is performed, with reference to FIG. 10(a) to FIG. 10(e) and FIG. 11(a) to FIG. 11(e). The coast shift down is shift down by which a coast torque is transmitted by the transmission 1 at the start and finish of shift down. FIG. 10(a) to FIG. 10(e) relate to the Sixth Embodiment, whereas FIG. 11(a) to FIG. 11(e) relate to the Seventh Embodiment. An outlined arrow D in each of FIG. 10 and FIG. 11 indicates the rotational direction of the shift drum 130. FIG. 10(a) and FIG. 11(a) show a state in which the coast shift down starts, whereas FIG. 10(e) and FIG. 11(e) show a state in which the coast shift down finishes. In FIG. 10(a) and FIG. 11(a), the slide gear 42 connected to the shift member 112 and the second speed gear 32 are in the coast meshed state. In the state shown in each of FIG. 10(a) and FIG. 11(a), the controller switches the clutch 2 from the connection state to the cut-off state. As a result, even though the coast meshing surface 58 is in contact with the coast meshing surface 68, the slide gear 42 is able to move away from the second speed gear 32 in the axial direction. The controller starts the rotation in the direction D of the shift drum 130 by driving the shift actuator 190 in the state shown in each of FIG. 10(a) and FIG. 11(a). As shown in FIG. 10(a) to FIG. 10(c) and FIG. 11(a) to FIG. 11(c), the shift member 112 moves in the axial direction as the pin portion 114b makes contact with the guide groove 142. Due to this, the meshing between the slide gear 42 and the second speed gear 32 is canceled. On the other hand, to begin with, the shift member 111 moves in the axial direction as the pin portion 114a makes contact with the guide groove 141, as shown in FIG. 10(a) to FIG. 10(c) and FIG. 11(a) to FIG. 11(c). As a result, the slide gear 41 moves to the drive meshed position or a position substantially identical with the drive meshed position.

As shown in FIG. 10(b) and FIG. 11(b), when the meshing between the second speed gear 32 and the slide gear 42 is canceled, the slide gear 41 rotates at a higher speed than the first speed gear 31. When the slide gear 41 rotating at a higher speed than the first speed gear 31 is moved in the axial direction toward the first speed gear 31, the dog 61 of the first speed gear 31 may make contact with the release guide surface 59 of the slide gear 41, and hence the slide gear 41 may not move smoothly. To avoid this, the controller performs below-described relative rotation control after the meshing between the second speed gear 32 and the slide gear 42 is canceled and before the meshing between the first speed gear 31 and the slide gear 41 starts. In other words, in the state shown in each of FIG. 10(b) and FIG. 11(b), the controller is performing this relative rotation control. The relative rotation control is control to switch the clutch 2 to a semi-connection state after slightly increasing the rotation speed of the driving source. To increase the rotation speed of the driving source indicates, for example, to increase the rotation speed of the crankshaft of the engine or to increase the rotation speed of the electric motor. The semi-connection state is a state in which the clutch 2 transmits power but the power transmission rate is smaller than the maximum rate. With this relative rotation control, the rotation speed of the first speed gear 31 is increased. In the Sixth Embodiment, the controller performs the relative rotation control to cause the first speed gear 31 to rotate at a higher speed than the slide gear 41. Therefore, on account of the elastic force exerted by the slide gear biasing spring 81 of the slide gear pressing member 80 in contact with the cam surface 71, the slide gear 41 moves to the coast meshed position. Accordingly, as shown in FIG. 10(c) and FIG. 10(d), the shift member 111 moves in the axial direction. On the other hand, it is unnecessary in the Seventh Embodiment to rotate the first speed gear 31 at a higher speed than the slide gear 41 by the relative rotation control. As the difference in rotation speed of the slide gear 41 is reduced by the relative rotation control, as shown in FIG. 11(c) and FIG. 11(d), the shift member 111 can be moved smoothly in the axial direction by the auxiliary movement mechanism 150 so that the slide gear 41 deeply meshes. Thereafter, on account of the elastic force exerted by the slide gear biasing spring 81 of the slide gear pressing member 80 in contact with the cam surface 71, the slide gear 41 moves to the coast meshed position. Accordingly, as shown in FIG. 11(d) and FIG. 11(e), the shift member 111 moves in the axial direction.

The controller of each of the Sixth Embodiment and the Seventh Embodiment rotates the shift drum 130 to reach a rotation angle θ which is the rotation angle at the start of the relative rotation control or a rotation angle θ close to the rotation angle at the start of the relative rotation control, by driving the shift actuator 190.

Depending on the situation of the relative rotation of the first speed gear 31 and the slide gear 41, the controller of the Seventh Embodiment may not perform the above-described relative rotation control. In this case, the controller rotates the shift drum 130 to reach a rotation angle θ which is the rotation angle at the finish of the shift down or a rotation angle θ close to the rotation angle at the finish of the shift down, by driving the shift actuator 190. Depending on the situation of the relative rotation of the first speed gear 31 and the slide gear 41, the controller of the Seventh Embodiment may perform the above-described relative rotation control to rotate the shift drum 130 to reach a rotation angle θ which is the rotation angle at the finish of the shift down or a rotation angle θ close to the rotation angle at the finish of the shift down, by driving the shift actuator 190.

The following will describe movement of the shift members 111 and 112 and the slide gears 41 and 42 when drive shift down from the second speed stage to the first speed stage is performed. The drive shift down is shift down by which a drive is transmitted by the transmission 1 at the start and finish of shift down. When the slide gear 42 and the second speed gear 32 are in the drive meshed state, the controller switches the clutch 2 from the connection state to the cut-off state. As a result, the meshing between the drive meshing surfaces 57 and 67 of the slide gear 42 and the second speed gear 32 is canceled. On account of the elastic force exerted by the slide gear biasing spring 81 of the slide gear pressing member 80 in contact with the cam surface 71, and other factor, the slide gear 42 moves in the axial direction from the drive meshed position to the coast meshed position. Accordingly, the shift member 112 moves in the axial direction. When the slide gear 42 is at the drive meshed position or the coast meshed position, the controller starts to drive the shift actuator 190. The subsequent movement of the shift member 112 until the drive shift down finishes is identical with or substantially identical with the movement in the coast shift down.

The movement of the shift member 111 encompasses movements identical with those shown in FIG. 10(a) to FIG. 10(c) and FIG. 11(a) to FIG. 11(c) in the coast shift down. In the Sixth Embodiment, the drive shift down finishes when the slide gear 41 reaches the drive meshed position (see FIG. 10(c)). In the Seventh Embodiment, when the first speed gear 31 is rotated at a higher speed than the slide gear 41 by the relative rotation control, the drive shift down finishes when the slide gear 41 reaches the drive meshed position for the first time (see FIG. 11(c)) in the same manner as in the Sixth Embodiment. In the Seventh Embodiment, when the difference in rotation speed between the first speed gear 31 and the slide gear 41 is reduced without causing the first speed gear 31 to rotate at a higher speed than the slide gear 41 by the relative rotation control, the slide gear 41 moves to the coast meshed position in the same manner as in FIG. 11(c) to FIG. 11(e). Thereafter, when the slide gear 41 moves from the coast meshed position to the drive meshed position, the drive shift down finishes. To be more specific, when the slide gear 41 is at the coast meshed position, the controller switches the clutch 2 from the semi-connection state or the cut-off state to the connection state so as to increase the rotation speed of the driving source. By a function of the movement guiding surface 69, the slide gear 41 moves from the coast meshed position to the drive meshed position.

The movement of the shift member 111 when shifting up from the first speed stage to the second speed stage, the movement of the shift member 112 when shifting up from the second speed stage to the third speed stage, and the movement of the shift member 111 when shifting up from the third speed stage to the fourth speed stage are identical. The movement of the shift member 112 when shifting up from the first speed stage to the second speed stage and the movement of the shift member 111 when shifting up from the second speed stage to the third speed stage are identical with one another. The movement of the shift member 111 when shifting down from the second speed stage to the first speed stage, the movement of the shift member 112 when shifting down from the third speed stage to the second speed stage, and the movement of the shift member 111 when shifting down from the fourth speed stage to the third speed stage are identical with one another. The movement of the shift member 112 when shifting down from the second speed stage to the first speed stage and the movement of the shift member 111 when shifting down from the third speed stage to the second speed stage are identical with one another.

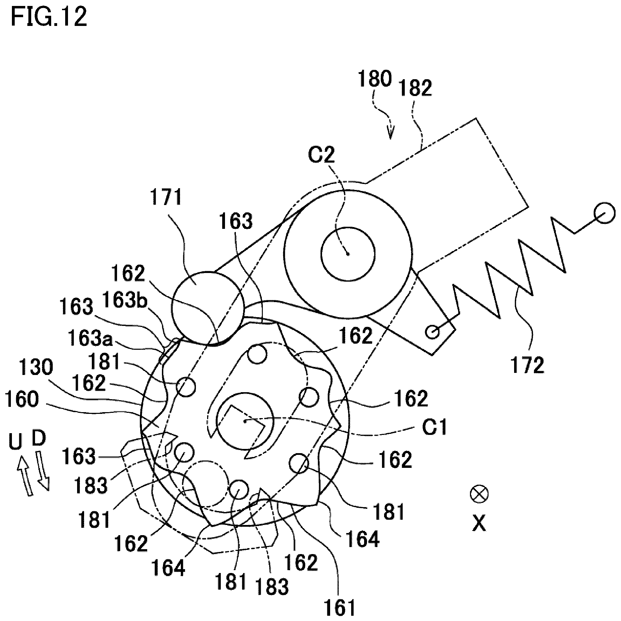

Now, we return to the explanation of the shift mechanism 100. As shown in FIG. 7, the segment 160 is provided at an end portion in the axial direction of the shift drum 130. The segment 160 is arranged to rotate integrally with the shift drum 130. The segment 160 may be independent from the shift drum 130, or may be integrally molded with the shift drum 130. As shown in FIG. 12, the segment cam section 161 of the segment 160 is formed at the outer circumferential edge of the segment 160. The segment cam section 161 has seven recesses 162, three intermediate maintaining portions 163, and two protrusions 164.

The segment pressing member 171 is in contact with the segment cam section 161 of the segment 160. The segment pressing member 171 includes a rotatable roller. The segment pressing member 171 is disposed so that the roller is in contact with the segment cam section 161 of the segment 160. The segment pressing member 171 is provided to be swingable about an axis C2 that is in parallel to the axial direction. The segment pressing member 171 is pressed toward the drum rotational central axis C1 by the elastic force of the segment biasing spring 172. When the transmission 1 takes a speed stage or the neutral position, the segment pressing member 171 is fitted in the recess 162 of the segment 160. The seven recesses 162 of the segment cam section 161 correspond to the six speed stages and the neutral position, respectively. The three intermediate maintaining portions 163 of the segment cam section 161 are formed between the two recesses 162 corresponding to the first speed stage and the second speed stage, between the two recesses 162 corresponding to the second speed stage and the third speed stage, and between the two recesses 162 corresponding to the third speed stage and the fourth speed stage. The two protrusions 164 of the segment 160 are formed between the two recesses 162 corresponding to the fourth speed stage and the fifth speed stage and between the two recesses 162 corresponding to the fifth speed stage and the sixth speed stage. The intermediate maintaining portion 163 will be detailed later.

The shift power transmission unit 180 includes contact portions 181 and a shift drum feeding member 182. The contact portions 181 are formed on the segment 160 to be aligned in the circumferential direction. The contact portions 181 protrude from the segment 160 in the axial direction. The contact portions 181 may be formed on the shift drum 130. Alternatively, the contact portions 181 may be formed on a member which rotates integrally with the shift drum 130 and is not the segment 160. The shift drum feeding member 182 is driven by the shift actuator 190 and is swung about the axis C2 in parallel to the axial direction. The shift drum feeding member 182 rotates the shift drum 130 by making contact with any of the contact portions 181. The shift drum feeding member 182 has two claws 183. As one of the two claws 183 of the swinging shift drum feeding member 182 is hooked on the contact portion 181 of the segment 160, the shift drum feeding member 182 rotates the shift drum 130. One of the two claws 183 is used for the shift up, whereas the other one is used for the shift down. After being swung by the shift actuator 190, the shift drum feeding member 182 is returned to the original position (position before the swing) by an elastic force of an unillustrated spring. On this account, the shift power transmission unit 180 is structured to have a backlash between the shift drum feeding member 182 and the contact portion 181. The shift drum feeding member 182 that is arranged to rotate the shift drum 130 by making contact with any of the contact portions 181 may not be shaped as shown in FIG. 12.

When shifting down to the first speed stage, the transmission 1 is arranged to be able to temporarily maintain the rotation angle θ of the shift drum 130 to fall within a first intermediate rotation angle region. When shifting down to the second speed stage, the transmission 1 is arranged to be able to temporarily maintain the rotation angle θ of the shift drum 130 to fall within a second intermediate rotation angle region. When shifting down to the third speed stage, the transmission 1 is arranged to be able to temporarily maintain the rotation angle θ of the shift drum 130 to fall within a third intermediate rotation angle region. The first intermediate rotation angle region, the second intermediate rotation angle region, and the third intermediate rotation angle region are collectively termed an intermediate rotation angle region ΔθN. The transmission 1 of each of the Sixth Embodiment and the Seventh Embodiment is arranged to be able to temporarily maintain the rotation angle θ of the shift drum 130 to fall within the intermediate rotation angle region ΔθN by means of the elastic forces of the segment biasing spring 172 and the slide gear biasing spring 81, when shifting down to the first speed stage, when shifting down to the second speed stage, and when shifting down to the third speed stage. The transmission 1 of the Seventh Embodiment is arranged to allow the shift drum 130 to continuously rotate without temporarily maintaining the rotation angle θ of the shift drum 130 to fall with the intermediate rotation angle region ΔθN, when shifting down to the first speed stage, when shifting down to the second speed stage, and when shifting down to the third speed stage. The shift drum feeding member 182 of the Seventh Embodiment is able to rotate the shift drum 130 both to be close to the intermediate rotation angle region ΔθN and to be close to the rotation angle at the finish of the shift down, when shifting down to the first speed stage, when shifting down to the second speed stage, and when shifting down to the third speed stage. The transmission 1 of each of the Sixth Embodiment and the Seventh Embodiment is arranged to allow the shift drum 130 to continuously rotate without temporarily maintaining the rotation angle θ of the shift drum 130 to fall with a predetermined rotation angle region, when shifting down to the fourth speed stage and when shifting down to the fifth speed stage.

The intermediate maintaining portion 163 is formed to maintain the rotation angle θ of the shift drum 130 to fall within the intermediate rotation angle region ΔθN, when shifting down to the first speed stage, the second speed stage, or the third speed stage. The intermediate maintaining portion 163 includes a flat portion 163a and an inclined portion 163b. The inclined portion 163b and the flat portion 163a are aligned in this order in the direction D. The flat portion 163a is formed to be substantially flat along the circumferential direction which is centered on the drum rotational central axis C1. The flat portion 163a is formed so that the distance from the drum rotational central axis C1 is substantially constant at all parts. The inclined portion 163b protrudes outward in the radial direction as compared to the flat portion 163a. The inclined portion 163b is tilted relative to the circumferential direction centered on the drum rotational central axis C1. The distance between the inclined portion 163b and the drum rotational central axis C1 is different between the parts. As the segment pressing member 171 makes contact with the inclined portion 163b due to the rotation of the shift drum 130 in the direction D, the elastic force of the segment biasing spring 172 imparts a resistance to the rotation of the segment 160 in the direction D.

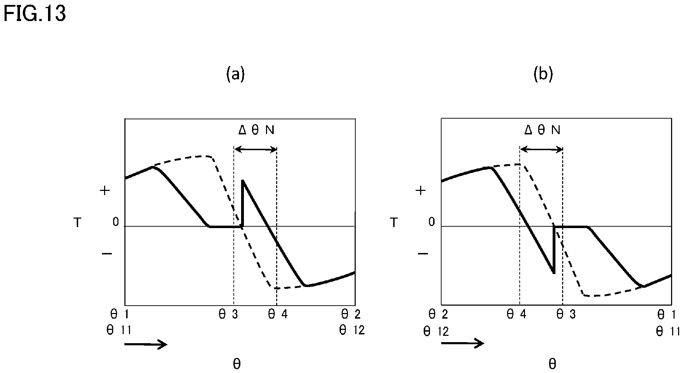

The graph shown in FIG. 13(a) is a graph showing changes of a torque T which is generated in the shift drum 130 by an elastic force of the segment biasing spring 172 when shifting down. The graph shown in FIG. 13(b) is a graph showing changes of a torque T which is generated in the shift drum 130 by an elastic force of the segment biasing spring 172 when shifting up. The vertical axis and the horizontal axis of each of the two graphs in FIG. 13 are identical with those in each of the two graphs shown in FIG. 1. A full line in FIG. 13(a) indicates the torque T which is generated in the shift drum 130 by the elastic force of the segment biasing spring 172 when shifting down to the first speed stage, the second speed stage, or the third speed stage. A dashed line in FIG. 13(a) indicates the torque T which is generated in the shift drum 130 by the elastic force of the segment biasing spring 172 when shifting down to the fourth speed stage or the fifth speed stage. A full line in FIG. 13(b) indicates the torque T which is generated in the shift drum 130 by the elastic force of the segment biasing spring 172 when shifting up to the second speed stage, the third speed stage, or the fourth speed stage. A dashed line in FIG. 13(b) indicates the torque T which is generated in the shift drum 130 by the elastic force of the segment biasing spring 172 when shifting up to the fifth speed stage or the sixth speed stage. A rotation angle θ1 and a rotation angle θ2 shown in FIG. 13(a) and FIG. 13(b) indicate a rotation angle θ at the start of shift down to the first speed stage, the second speed stage, or the third speed stage and a rotation angle θ at the finish of the shift down. A rotation angle θ11 and a rotation angle θ12 shown in FIG. 13(a) and FIG. 13(b) indicate a rotation angle θ at the start of shift down to the fourth speed stage or the fifth speed stage and a rotation angle θ at the finish of the shift down. No matter to which speed stage the shift down is performed, the difference between the rotation angle θ at the start and the rotation angle θ at the finish is more or less the same. In the Seventh Embodiment, the rotation angles at the start and at the finish are slightly different between the drive shift down and the coast shift down. The rotation angles θ1 and θ2 may be interpreted as the rotation angles at the start and at the finish of the drive shift down, or may be interpreted as the rotation angles at the start and at the finish of the coast shift down. The intermediate rotation angle region ΔθN shown in FIG. 13(a) and FIG. 13(b) indicates the first intermediate rotation angle region, the second intermediate rotation angle region, or the third intermediate rotation angle region. The intermediate rotation angle region ΔθN is a rotation angle region between the third rotation angle Θ3 and the fourth rotation angle θ4.

As shown in the graph of FIG. 13(a), when shifting down to the fourth speed stage or the fifth speed stage, a torque generated by the elastic force of the segment biasing spring 172 is continuously changed from a rotation resistance torque to a rotation driving torque. This is because the segment 160 has the protrusions 164 between the two recesses 162 corresponding to the fourth speed stage and the fifth speed stage and between the two recesses 162 corresponding to the fifth speed stage and the sixth speed stage. On the other hand, when shifting down to the first speed stage, the second speed stage, or the third speed stage, after a rotation resistance torque is generated by the elastic force of the segment biasing spring 172, neither a rotation driving torque nor a rotation resistance torque is generated by the elastic force of the segment biasing spring 172. At this time, the segment pressing member 171 is in contact with the flat portion 163a of the intermediate maintaining portion 163. Thereafter, the rotation resistance torque is generated again by the elastic force of the segment biasing spring 172. At this time, the segment pressing member 171 is in contact with the inclined portion 163b of the intermediate maintaining portion 163. Thereafter, when the segment pressing member 171 climbs over the inclined portion 163b, the torque generated by the elastic force of the segment biasing spring 172 is changed from the rotation resistance torque to the rotation driving torque.

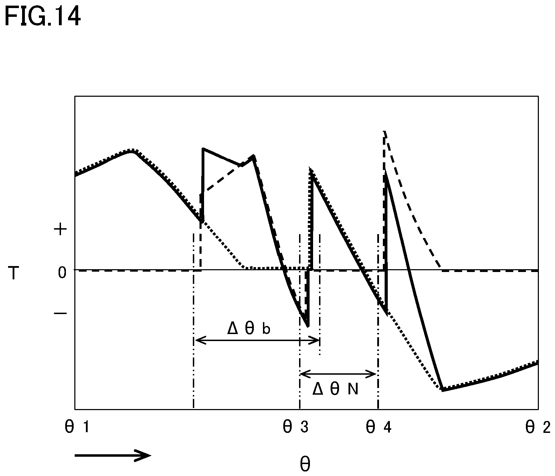

The graph in FIG. 14 is a graph showing changes of a torque T which is generated in the shift drum 130 by elastic forces of the segment biasing spring 172 and the slide gear biasing spring 81 when shifting down to the first speed stage, the second speed stage or the third speed stage. The vertical axis and the horizontal axis of the graph in FIG. 14 are identical with those in the graph shown in FIG. 13(a). A rotation angle θ1 and a rotation angle θ2 shown in FIG. 14 are identical with the rotation angle θ1 and the rotation angle θ2 shown in FIG. 13(a). A rotation angle region Δθb in FIG. 14 indicates a rotation angle region of the shift drum 130 during a period in which the slide gear 42 is moving in the axial direction in shifting down to the first speed stage or the third speed stage or during a period in which the slide gear 41 is moving in the axial direction in shifting down to the second speed stage. A full line in FIG. 14 indicates a synthetic torque of a torque generated in the shift drum 130 by the elastic force of the segment biasing spring 172 and a torque generated in the shift drum 130 by the elastic force of the slide gear biasing spring 81. A dotted line in FIG. 14 indicates a torque generated in the shift drum 130 by the elastic force of the segment biasing spring 172. A dashed line in FIG. 14 indicates a torque generated in the shift drum 130 by the elastic force of the slide gear biasing spring 81.

In regard to changes of a torque T which is generated in the shift drum 130 by elastic forces of the segment biasing spring 172 and the slide gear biasing spring 81 when shifting down to the first speed stage, the second speed stage, or the third speed stage, the following will describe changes in the shifting down to the first speed stage. As shown in the graph of FIG. 14, when the rotation resistance torque generated by the segment biasing spring 172 is decreasing after the start of shift down, a rotation resistance torque is generated by the elastic force of the slide gear biasing spring 81. This rotation resistance torque due to the elastic force of the slide gear biasing spring 81 is generated as the slide gear 42 moves in the axial direction at the start of the shift down. To be more specific, slightly after the establishment of the state shown in each of FIG. 10(a) and FIG. 11(a), the shift member 112 moves in the axial direction and the circumferential direction relative to the shift drum 130 as the pin portion 114b makes contact with the guide groove 142. At this stage, because the slide gear pressing member 80 is in contact with the cam surface 71 of the slide gear 42, the elastic force of the slide gear biasing spring 81 imparts a resistance to the movement of the slide gear 42 in the axial direction. On this account, the elastic force of the slide gear biasing spring 81 imparts a resistance to the movement of the shift member 112 in the axial direction and the circumferential direction relative to the shift drum 130 on account of the contact between the pin portion 114b and the guide groove 142. As a result, a rotation resistance torque is generated in the shift drum 130 by the elastic force of the slide gear biasing spring 81.

Thereafter, as shown in FIG. 14, while the rotation resistance torque is generated by the elastic force of the slide gear biasing spring 81, no torque is generated by the segment biasing spring 172. Thereafter, the torque generated by the elastic force of the slide gear biasing spring 81 is changed from the rotation resistance torque to the rotation driving torque. This rotation driving torque is generated by the movement of the slide gear 41 in the axial direction. To be more specific, immediately before the establishment of the state shown in each of FIG. 10(b) and FIG. 11(b), the shift member 112 moves in the axial direction and the circumferential direction relative to the shift drum 130 as the pin portion 114b makes contact with the guide groove 142. At the same time, the slide gear 42 moves in the axial direction so that the slide gear pressing member 80 enters the checking groove 72 of the slide gear 42. When the slide gear pressing member 80 partially enters the checking groove 72, the elastic force of the slide gear biasing spring 81 acts as a force moving the slide gear 42 in the axial direction to cause the slide gear pressing member 80 to be fitted in the checking groove 72. On this account, the elastic force of the slide gear biasing spring 81 facilitates the movement of the shift member 112 in the axial direction and the circumferential direction relative to the shift drum 130 on account of the contact between the pin portion 114b and the guide groove 142. As a result, a rotation driving torque is generated in the shift drum 130 by the elastic force of the slide gear biasing spring 81.

Thereafter, as shown in FIG. 14, from a rotation angle θ substantially identical with the rotation angle θ at which the torque is not generated by the elastic force of the slide gear biasing spring 81, a rotation resistance torque is generated again by the elastic force of the segment biasing spring 172. Thereafter, the torque generated by the elastic force of the segment biasing spring 172 is changed from the rotation resistance torque to the rotation driving torque. While the rotation driving torque is generated by the elastic force of the segment biasing spring 172, a rotation resistance torque is generated by the elastic force of the slide gear biasing spring 81. This rotation resistance torque is generated by the movement of the slide gear 41 in the axial direction. To be more specific, slightly after the establishment of the state shown in each of FIG. 10(b) and FIG. 11(b), the shift member 111 moves in the axial direction and the circumferential direction relative to the shift drum 130 as the pin portion 114a makes contact with the guide groove 141. At the same time, the slide gear 41 moves in the axial direction in a state in which the slide gear pressing member 80 enters the checking groove 72 of the slide gear 41. On this account, the elastic force of the slide gear biasing spring 81 imparts a resistance to the movement of the slide gear 41 in the axial direction. On this account, the elastic force of the slide gear biasing spring 81 imparts a resistance to the movement of the shift member 111 in the axial direction and the circumferential direction relative to the shift drum 130 on account of the contact between the pin portion 114a and the guide groove 141. As a result, a rotation resistance torque is generated in the shift drum 130 by the elastic force of the slide gear biasing spring 81.

As described above, it is possible to temporarily maintain the rotation angle θ of the shift drum 130 to fall within the intermediate rotation angle region ΔθN because a torque is generated by the elastic forces of the segment biasing spring 172 and the slide gear biasing spring 81 when shifting down to the first speed stage, when shifting down to the second speed stage, and when shifting down to the third speed stage.

Many types of known transmissions of straddled vehicles employ a segment integrally rotating with a shift drum and a segment pressing member pressed onto the segment by an elastic force of a segment biasing spring. However, the segment of the known transmission of the straddled vehicle has a protrusion 164 in place of the intermediate maintaining portion 163. The transmission 1 of each of the Sixth Embodiment and the Seventh Embodiment includes the segment 160, the segment pressing member 171, and the segment biasing spring 172. On this account, a significant design change from the known transmission of the straddled vehicle is not required when the transmission 1 is mounted on the straddled vehicle.

The shift power transmission unit 180 includes a shift drum feeding member 182 which is swung by the shift actuator 190 and rotates the shift drum 130 by making contact with any of the contact portions 181. Many types of known transmissions of straddled vehicles employ such a shift drum feeding member. On this account, a significant design change from the known transmission of the straddled vehicle is not required when the transmission 1 of each of the Sixth Embodiment and Seventh Embodiment is mounted on the straddled vehicle. Furthermore, the transmission 1 of each of the Sixth Embodiment and Seventh Embodiment can be accommodated in substantially the same space as the known transmission of the straddled vehicle.

When the shift power transmission unit 180 is arranged to directly rotationally drive the shift drum 130 by the shift actuator 190, the position of the shift actuator 190 is restricted. On the other hand, the shift power transmission unit 180 of each of the Sixth Embodiment and Seventh Embodiment rotates the shift drum 130 by using the shift drum feeding member 182 which is driven and swung by the shift actuator 190. On this account, the degree of freedom of the layout of the shift power transmission unit 180 of each of the Sixth Embodiment and Seventh Embodiment is high as compared to the case where the shift drum 130 is directly rotationally driven by the shift actuator 190.

In the example shown in FIG. 1, the transmission 1 is a six-speed transmission. The transmission 1 of each of the Sixth Embodiment and Seventh Embodiment is a six-speed transmission, too. However, the transmission of the present teaching is not limited to a six-speed transmission. The transmission 1 of each of the Sixth Embodiment and Seventh Embodiment is arranged so that, at the time of shift up to the second speed stage, shift up to the third speed stage, and shift up to the fourth speed stage, a double-meshed state is temporarily established, whereas, at the time of shift up to the fifth speed stage and shift up to the sixth speed stage, the double-meshed state is not established. When the transmission of the present teaching is a six-speed transmission, the speed stage after the completion of shift up with which the double-meshed state is temporarily established may not be the second speed stage, the third speed stage, or the fourth speed stage. When the transmission of the present teaching is a six-speed transmission, the speed stage after the completion of shift down of temporarily maintaining the speed stage in the intermediate rotation angle region ΔθN may not be the first speed stage, the second speed stage, or the third speed stage. The transmission of the present teaching is arranged so that the double-meshed state is temporarily established when shifting up to at least one speed stage.

In the Sixth Embodiment and the Seventh Embodiment, two slide gears may be provided in place of the slide gear 23. The transmission 1 may be arranged so that the double-meshed state is temporarily established when shifting up to the fifth speed stage or shifting up to the sixth speed stage. To be more specific, for example, among these slide gears, at least one cam surface 71 and a checking groove 72 may be provided in the slide gear for the fifth speed stage. In this case, the slide gear pressing member 80 is provided on the input shaft 11. These two slide gears may have dogs that are provided at end portions opposing the shift gears 35 and 36 in the axial direction and have a common feature as the dogs 51 to 54. The dogs 65 and 66 of the shift gears 35 and 36 may have a common feature as the dogs 61 to 64 of the shift gears 31 to 34. When the transmission 1 is arranged so that a double-meshed state is temporarily established at the time of shift up to the fifth speed stage and shift up to the sixth speed stage, the transmission 1 may be configured to temporarily maintain the intermediate rotation angle region ΔθN at the time of shift down to the fourth speed stage and shift down to the fifth speed stage. To be more specific, the segment 160 may have two intermediate maintaining portions 163 in place of the two protrusions 164.

In the examples of FIG. 1, FIG. 3(a), FIG. 3(b), and FIG. 4, the n-th speed stage slider 40a is provided between two shift gears 30. Alternatively, the shift gear 30 neighboring the n-th speed stage slider 40a in the axial direction may be only the n-th gear 30a. In the examples of FIG. 1 and FIG. 4, the (n+1)-th speed stage slider 40b is provided between two shift gears 30. Alternatively, the shift gear 30 neighboring the (n+1)-th speed stage slider 40b in the axial direction may be only the (n+1)-th gear 30b.

The transmission of the present teaching may have plural segments. For example, when the transmission of the present teaching has two segments, the two segments may be arranged as described below. A first segment has an outer circumferential edge in which plural recesses are formed to correspond to speed stages, respectively. A second segment has an outer circumferential edge in which a recess is formed to maintain the rotation angle of a shift drum to fall within an intermediate rotation angle region. The recess of the second segment is positioned between an n-th speed stage recess and an (n+1)-th speed stage recess of the first segment, when viewed in the axial direction.

The transmission 1 of the Seventh Embodiment has the auxiliary movement mechanism 150 which is arranged to differentiate the loci of the pin portions 114a and 114b of the shift members 111 and 112 in the guide grooves 141 and 142 between a case of shift up and a case of shift down. The transmission of present teaching may have a mechanism different from the auxiliary movement mechanism 150, as a mechanism for differentiating the locus of a part of a shift member in a guide groove between a case of shift up and a case of shift down. For example, an auxiliary cam may be provided in the guide groove as shown in FIG. 15 of Patent Literature 1.

### [Reference Signs List]

1: transmission
11: input shaft
12: output shaft
23: slide gear (slider)
40: slider
40a: n-th speed stage slider
40b: (n+1)-th speed stage slider
41, 42: slide gear (slider, n-th speed stage slider, (n+1)-th speed stage slider)
30, 31 to 36: shift gear
30a: n-th gear
30b: (n+1)-th gear
51 to 56 and 61 to 66: dog
71: cam surface
72: checking groove
80: slider pressing member, slide gear pressing member
80a, 80b: slider pressing member
81: slider biasing spring, slide gear biasing spring
110, 111, 112, 113: shift member
110a: n-th speed stage shift member
130: shift drum
140, 141, 142, 143: guide groove
140a: n-th speed stage guide groove
160: segment
161: segment cam section
162: recess
162a: n-th speed stage recess
162b: (n+1)-th speed stage recess
163: intermediate maintaining portion
171: segment pressing member
172: segment biasing spring
180: shift power transmission unit
181: pin portion (contact portion)
182: shift drum feeding member
190: shift actuator

## Claims

1. A transmission comprising:
shift gears which are provided on an input shaft and an output shaft to be each rotatable relative to the input shaft or the output shaft and immovable in an axial direction of the input shaft and the output shaft;
sliders which are provided on the input shaft and the output shaft, each of which is integrally rotatable with the input shaft or the output shaft and is movable in the axial direction, each of which includes a dog capable of meshing with a dog of a shift gear neighboring the each slider in the axial direction among the shift gears, and which are driven in the axial direction to change a speed stage; and
shift members which are integrally movable with the respective sliders in the axial direction,
the transmission being arranged so that, when shifting up from an n-th speed stage to an (n+1)-th speed stage, the transmission is temporarily in a double-meshed state where an n-th gear and an (n+1)-th gear among the shift gears simultaneously mesh with an n-th speed stage slider and an (n+1)-th speed stage slider among the sliders by the dogs, and the transmission being arranged so that, when the transmission is in the double-meshed state, a force of canceling meshing by the dogs is generated in the n-th speed stage slider, n being a natural number of one or more, the transmission further comprising:
one shift drum which has guide grooves in which parts of the shift members are located, respectively, and is arranged to move the shift members in the axial direction by rotating about a drum rotational central axis that is in parallel to the axial direction, when shifting down from the (n+1)-th speed stage to the n-th speed stage, the shift drum rotating in a first direction from a first rotation angle to a second rotation angle, and when shifting up from the n-th speed stage to the (n+1)-th speed stage, the shift drum rotating in a second direction opposite to the first direction, from the second rotation angle to the first rotation angle;
at least one segment which rotates integrally with the shift drum and includes a segment cam section;
at least one segment pressing member which is provided to make contact with the segment cam section of the at least one segment;
at least one segment biasing spring which is provided to press the at least one segment pressing member onto the segment cam section toward the drum rotational central axis; and
a shift actuator which is configured to rotate the shift drum, and
wherein a rotation angle of the shift drum at a time point at which meshing between the (n+1)-th gear and the (n+1)-th speed stage slider by the dogs is canceled, when shifting down from the (n+1)-th speed stage to the n-th speed stage, is defined as a third rotation angle, a rotation angle of the shift drum at a time point at which the n-th speed stage slider starts to move in the axial direction after the shift drum rotates to the third rotation angle, when shifting down from the (n+1)-th speed stage to the n-th speed stage, is defined as a fourth rotation angle, and a rotation angle region of the shift drum from the third rotation angle to the fourth rotation angle is defined as an intermediate rotation angle region,
the segment cam section of the at least one segment being arranged to differentiate a change in distance from the drum rotational central axis to a part of the segment cam section, which is in contact with the at least one segment pressing member, between shifting down from the (n+1)-th speed stage to the n-th speed stage and shifting up from the n-th speed stage to the (n+1)-th speed stage, so that the maximum value of a rotational resistance force applied to the shift drum due to application of a rotational resistance force to the at least one segment by an elastic force of the at least one segment biasing spring in the intermediate rotation angle region in shift down from the (n+1)-th speed stage to the n-th speed stage is larger than the maximum value of the rotational resistance force applied to the shift drum due to the application of the rotational resistance force to the at least one segment by the elastic force of the at least one segment biasing spring in the intermediate rotation angle region in shift up from the n-th speed stage to the (n+1)-th speed stage, and
the transmission being arranged so that, when shifting down from the (n+1)-th speed stage to the n-th speed stage, the rotation angle of the shift drum is temporarily maintained to fall within the intermediate rotation angle region, because a rotational resistance force larger than the maximum value of the rotational resistance force applied to the shift drum due to the elastic force of the at least one segment biasing spring in the intermediate rotation angle region in shift up from the n-th speed stage to the (n+1)-th speed stage is applied to the shift drum due to the elastic force of the at least one segment biasing spring in the intermediate rotation angle region in shift down from the (n+1)-th speed stage to the n-th speed stage.

2. The transmission according to claim 1, wherein the segment cam section of the at least one segment is arranged so that, when shifting up from the n-th speed stage to the (n+1)-th speed stage, the shift drum continuously rotates without maintaining the rotation angle of the shift drum to fall within the intermediate rotation angle region.

3. The transmission according to claim 1 or 2, further comprising a slider pressing member which is provided on the input shaft or the output shaft to make contact with the n-th speed stage slider,
the slider pressing member including a slider biasing spring which is configured to apply an elastic force to the n-th speed stage slider in a radial direction away from the input shaft or the output shaft,
the n-th speed stage slider including a cam surface which makes contact with the slider pressing member when the speed stage is the n-th speed stage and is arranged to convert an elastic force exerted in the radial direction by the slider biasing spring of the slider pressing member into a force acting in the axial direction,
among the shift members, a part of an n-th speed stage shift member moving in the axial direction integrally with the n-th speed stage slider being located in an n-th speed stage guide groove among the guide grooves,
the n-th speed stage guide groove having a groove width that allows the part of the n-th speed stage shift member to move in the n-th speed stage guide groove in the axial direction when shifting down from the (n+1)-th speed stage to the n-th speed stage, and
the transmission being arranged so that, when shifting down from the (n+1)-th speed stage to the n-th speed stage, the n-th speed stage slider moves in the axial direction due to contact between the n-th speed stage shift member and the n-th speed stage guide groove and then the n-th speed stage slider moves in the axial direction because the cam surface of the n-th speed stage slider receives an elastic force of the slider biasing spring.

4. The transmission according to any one of claims 1 to 3, further comprising a slider pressing member which is provided on the input shaft or the output shaft to make contact with the n-th speed stage slider, the slider pressing member including a slider biasing spring which is configured to apply an elastic force to the n-th speed stage slider in a radial direction away from the input shaft or the output shaft,
the n-th speed stage slider having a checking groove in which the slider pressing member is fitted when the speed stage is not the n-th speed stage,
the checking groove being arranged so that, when shifting down from the (n+1)-th speed stage to the n-th speed stage, a resistance is applied by the elastic force of the slider biasing spring to movement in the axial direction of the n-th speed stage slider that is in a state in which the slider pressing member is fitted in the checking groove, and
the transmission being arranged so that, when shifting down from the (n+1)-th speed stage to the n-th speed stage, a resistance is applied to the rotation in the first direction of the shift drum by the elastic force of the slider biasing spring in the intermediate rotation angle region or in a rotation angle region immediately after the intermediate rotation angle region.

5. The transmission according to any one of claims 1 to 4, further comprising a shift power transmission unit which is configured to transmit power from the shift actuator to the shift drum,
the shift power transmission unit being structured to have a backlash.

6. The transmission according to claim 5, wherein
the shift power transmission unit includes:
contact portions which are formed in the shift drum or a member integrally rotating with the shift drum and are aligned in a circumferential direction; and
a shift drum feeding member which is driven by the shift actuator to be swung and is configured to rotate the shift drum by making contact with any of the contact portions.

7. The transmission according to any one of claims 1 to 6, wherein
the at least one segment is one segment,
the at least one segment biasing spring is one segment biasing spring,
the segment cam section includes: an n-th speed stage recess which makes contact with the segment pressing member when the speed stage is the n-th speed stage; an (n+1)-th speed stage recess which makes contact with the segment pressing member when the speed stage is the (n+1)-th speed stage;
and an intermediate maintaining portion provided between the n-th speed stage recess and the (n+1)-th speed stage recess,
the intermediate maintaining portion is arranged to differentiate a change in distance from the drum rotational central axis to a part of the intermediate maintaining portion, which is in contact with the segment pressing member, between shifting down and shifting up, so that the maximum value of the rotational resistance force applied to the shift drum due to application of the rotational resistance force to the segment by the elastic force of the segment biasing spring in the intermediate rotation angle region in shift down from the (n+1)-th speed stage to the n-th speed stage is larger than the maximum value of the rotational resistance force applied to the shift drum due to the application of the rotational resistance force to the segment by the elastic force of the segment biasing spring in the intermediate rotation angle region in shift up from the n-th speed stage to the (n+1)-th speed stage, and
the transmission is arranged so that, when shifting down from the (n+1)-th speed stage to the n-th speed stage, the rotation angle of the shift drum is temporarily maintained to fall within the intermediate rotation angle region while the segment pressing member is in contact with the intermediate maintaining portion, because a rotational resistance force larger than the maximum value of the rotational resistance force applied to the shift drum due to the elastic force of the segment biasing spring in the intermediate rotation angle region in shift up from the n-th speed stage to the (n+1)-th speed stage is applied to the shift drum due to the elastic force of the segment biasing spring in the intermediate rotation angle region in shift down from the (n+1)-th speed stage to the n-th speed stage.
